(19) Europäisches Patentamt
European Patent Office
Office européen des brevets

(11) EP 4 755 941 A1

(12) **EUROPEAN PATENT APPLICATION**
published in accordance with Art. 153(4) EPC

(43) Date of publication:
**10.06.2026 Bulletin 2026/24**

(21) Application number: **25778293.8**

(22) Date of filing: **12.03.2025**

(51) International Patent Classification (IPC):
***C08G 59/40*** (2006.01) ***C08G 59/28*** (2006.01)
***C08G 59/50*** (2006.01) ***C08J 5/24*** (2006.01)

(52) Cooperative Patent Classification (CPC):
**C08G 59/28; C08G 59/40; C08G 59/50; C08J 5/24**

(86) International application number:
**PCT/JP2025/009443**

(87) International publication number:
**WO 2025/204944 (02.10.2025 Gazette 2025/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.03.2024 JP 2024057145**

(71) Applicant: **TEIJIN LIMITED**
**Kita-ku,**
**Osaka-shi,**
**Osaka 530-0005 (JP)**

(72) Inventors:
- **FUKUDA, Jun-ichi**
  **Osaka-shi, Osaka 530-0005 (JP)**
- **ODA, Akimichi**
  **Osaka-shi, Osaka 530-0005 (JP)**

(74) Representative: **Carpmaels & Ransford LLP**
**One Southampton Row**
**London WC1B 5HA (GB)**

(54) **EPOXY RESIN COMPOSITION, EPOXY RESIN CURED PRODUCT, PREPREG, FIBER-REINFORCED COMPOSITE MATERIAL, METHOD FOR REPAIRING EPOXY RESIN CURED PRODUCT, METHOD FOR REPAIRING FIBER-REINFORCED COMPOSITE MATERIAL, METHOD FOR RESHAPING EPOXY RESIN CURED PRODUCT, METHOD FOR RESHAPING FIBER-REINFORCED COMPOSITE MATERIAL, METHOD FOR DECOMPOSING EPOXY RESIN CURED PRODUCT, AND METHOD FOR RECOVERING REINFORCING FIBERS FROM FIBER-REINFORCED COMPOSITE MATERIAL**

(57) An epoxy resin composition includes at least an epoxy resin [A] and a curing agent [B], in which the epoxy resin [A] contains at least a diglycidylamine-type epoxy resin [A1] represented by the following formula (1), and the curing agent [B] contains at least a curing agent [B1] containing a dynamic covalent bonding site Y [in formula (1), each of $R_{1a}$ to $R_{1e}$ independently represents a hydrogen atom, an aliphatic hydrocarbon group having 1 to 20 carbon atoms, an alicyclic hydrocarbon group, an aromatic hydrocarbon group, an alkoxy group, an amino group, or a halogen atom].

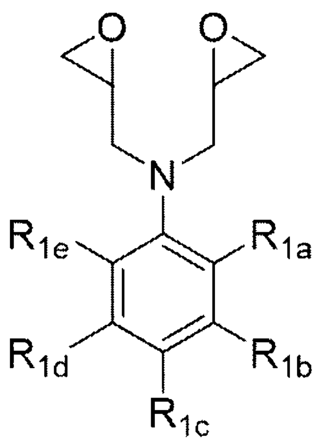

(1)

EP 4 755 941 A1

FIG.1

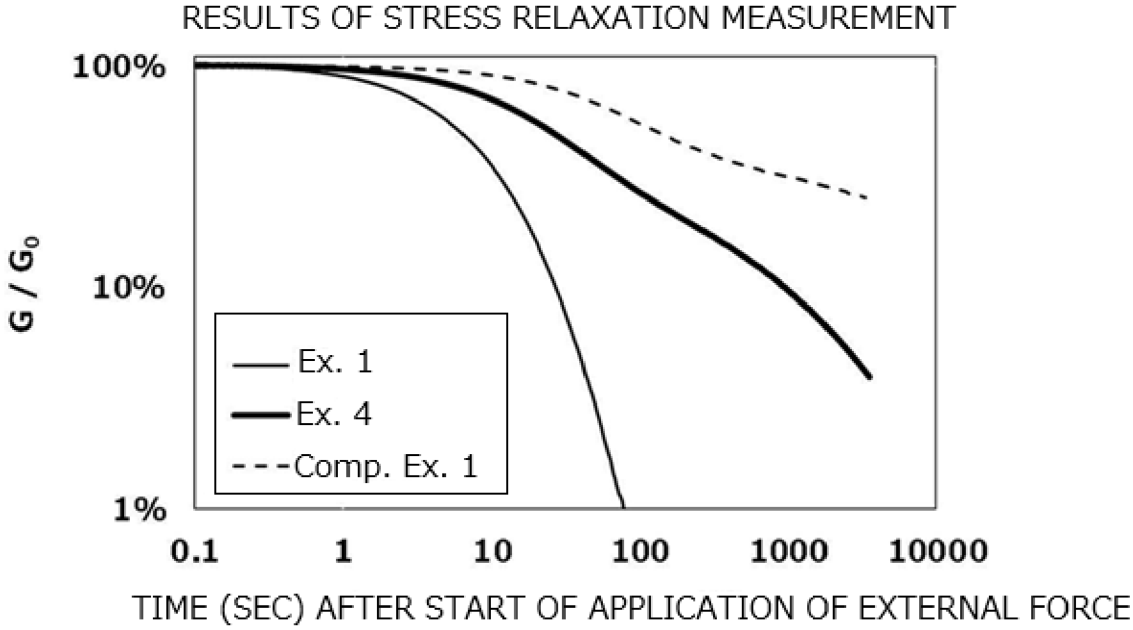
RESULTS OF STRESS RELAXATION MEASUREMENT
100%
10%
1%
G / G0
Ex. 1
Ex. 4
Comp. Ex. 1
0.1
1
10
100
1000
10000
TIME (SEC) AFTER START OF APPLICATION OF EXTERNAL FORCE

## Description

### Technical Field

The present disclosure relates to an epoxy resin composition, an epoxy resin cured product, a prepreg, a fiber-reinforced composite material, a method for healing the epoxy resin cured product, a method for healing the fiber-reinforced composite material, a method for remolding the epoxy resin cured product, a method for remolding the fiber-reinforced composite material, a method for decomposing the epoxy resin cured product, and a method for recovering reinforcing fibers from the fiber-reinforced composite material.

### Background Art

Fiber-reinforced composite materials, obtained by compounding reinforcing fiber materials such as carbon fiber, glass fiber or aramid fiber with various matrix resins, have been widely used in a variety of fields and applications. Aerospace fields and industrial fields in need of advanced mechanical properties and heat resistance have mainly employed thermosetting resins such as unsaturated polyester resin, epoxy resin or polyimide resin, as the matrix resin.
These thermosetting resins, once cured, are however no longer fluidic even under heating, and therefore cannot be remolded or deformed. Scraps of the cured product or defective molding products output from manufacturing processes have therefore been discarded. Despite various improvements for reducing disposal volume of the cured product made from the viewpoint of manufacturing processes, it has been difficult to reduce the disposal volume of the cured product only by improving the manufacturing processes.
From such circumstances, improvement from the viewpoint of the resin composition has been investigated. Among them, a focus has been placed on a technique of recycling the scraps of the cured product or the defective molding products, by introducing an exchangeable and/or recombinable chemical bonding site (also referred to as dynamic covalent bonding site) into the resin composition. According to this technique, the exchangeable and/or recombinable chemical bonding site cleaves under heating to resolve the internal network of the cured product, and the resin comes to have fluidity and remoldability.
For example, WO 2015/181054 A1 discloses an epoxy resin composition that uses, as a curing agent, a compound that contains a disulfide bond as the exchangeable and/or recombinable chemical bonding site.
As another example, J. Am. Chem. Soc. 2022, 144, 12280-12289 discloses an epoxy resin composition that uses, as a curing agent, a compound that contains a silyl ether bond as the exchangeable and/or recombinable chemical bonding site.

### SUMMARY OF INVENTION

### Technical Problem

The epoxy resin compositions described in WO 2015/181054 A1 and J. Am. Chem. Soc. 2022, 144, 12280-12289 have, however, suffered from a need for excessive use of expensive compounds such as those containing disulfide bond or silyl ether bond, in order to achieve a sufficient level of fluidity of the cured product. A possible reason would be that activation energy of a bond exchange reaction at the molecular level is larger than binding energy ascribed to the resultant rigid molecular network, and that bond exchange activity is poor due to a poor amount of introduction of the dynamic covalent bonding site, and less frequency of collision thereof. On the other hand, use of the curing agent, in excess of the theoretical equivalent with respect to the epoxy resin, has been known to cause a drawback that the heat resistance and mechanical properties of the cured product are greatly impaired. In particular, the disulfide bond, which increases the degree of freedom of intramolecular rotation, is likely to degrade resin fracture toughness in the cured product. In addition, the compound that contains the silyl ether bond, containing a flexible alkyl chain in many cases, tends to lower the rigidity of the molecular chain in the cured product, and to degrade the mechanical heat resistance.
The present disclosure has been made in view of the circumstance, wherein an object of which is to provide an epoxy resin composition excellent in remoldability and self-healing property in a cured product, despite the use of a compound that contains a dynamic covalent bonding site in an amount equal to or smaller than the theoretical equivalent with respect to the epoxy resin; an epoxy resin cured product resulting from curing of the aforementioned epoxy resin composition; a prepreg; a fiber-reinforced composite material; a method for healing the epoxy resin cured product; a method for healing the fiber-reinforced composite material; a method for remolding the epoxy resin cured product; a method for remolding the fiber-reinforced composite material, a method for decomposing the epoxy resin cured product; and a method for recovering reinforcing fibers from the fiber-reinforced composite material. Solution to Problem
Specific means for solving the aforementioned problems include the following aspects.

<1> An epoxy resin composition, containing at least an epoxy resin [A] and a curing agent [B], in which:

the epoxy resin [A] contains at least a diglycidylamine-type epoxy resin [A1] represented by the following formula (1), and
the curing agent [B] contains at least a curing agent [B1] containing a dynamic covalent bonding site Y:

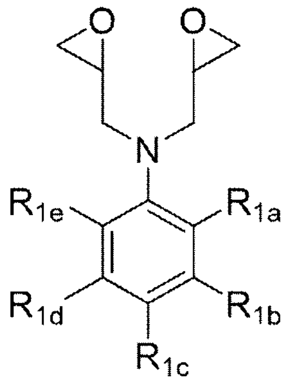

(1)

in formula (1), each of $R_{1a}$, $R_{1b}$, $R_{1c}$, $R_{1d}$, and $R_{1e}$ independently represents a hydrogen atom, an aliphatic hydrocarbon group having 1 to 20 carbon atoms, an alicyclic hydrocarbon group, an aromatic hydrocarbon group, an alkoxy group, an amino group, or a halogen atom.

<2> The epoxy resin composition according to <1>, in which a ratio (a1)/(a), defined as a molar amount (a1) of epoxy groups in the diglycidylamine-type epoxy resin [A1] relative to a molar amount (a) of epoxy groups in the epoxy resin [A], is from 0.05 to 1.0.
<3> The epoxy resin composition according to <1> or <2>, in which the curing agent [B1] contains active hydrogens, and a ratio (b1)/(b), defined as a molar amount (b1) of active hydrogens in the curing agent [B1] relative to a molar amount (b) of active hydrogens in the curing agent [B], is from 0.1 to 1.0.
<4> The epoxy resin composition according to any one of <1> to <3>, in which a ratio (b1)/(a), defined as a molar amount (b1) of active hydrogens in the curing agent [B1] relative to a molar amount (a) of epoxy groups in the epoxy resin [A], is from 0.6 to 1.5.
<5> The epoxy resin composition according to any one of <1> to <4>, in which, when the composition is cured to a degree of cure of 90% or higher to obtain a cured product and an external force is applied to the cured product at a temperature 40°C higher than the glass transition temperature of the cured product, a stress relaxation rate at one hour from the start of application of the external force is 95% or more.
<6> The epoxy resin composition according to any one of <1> to <5>, in which the curing agent [B1] contains an amine-based curing agent represented by the following formula (2):

$$H_2N\text{-}R^1\text{-}Y\text{-}R^2\text{-}NH_2 \qquad (2)$$

in formula (2), each of $R^1$ and $R^2$ independently represents an aliphatic hydrocarbon group having 1 to 20 carbon atoms, an alicyclic hydrocarbon group, an aromatic hydrocarbon group, an ether group, or a divalent group formed by combining two or more groups selected from the group consisting of an aliphatic hydrocarbon group having 1 to 20 carbon atoms, an alicyclic hydrocarbon group, an aromatic hydrocarbon group, and an ether group, and Y represents a dynamic covalent bonding site.
<7> The epoxy resin composition according to any one of <1> to <6>, in which the dynamic covalent bonding site Y contains a disulfide bond.
<8> The epoxy resin composition according to any one of <1> to <7>, in which the curing agent [B1] contains an amine-based curing agent represented by the following formula (3):

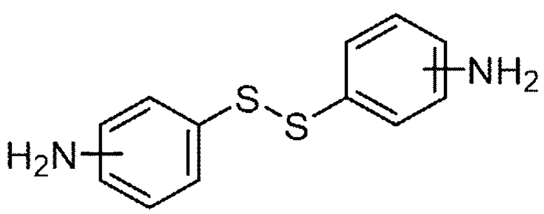

(3)

.

<9> An epoxy resin cured product, obtained by curing the epoxy resin composition according to <1>.
<10> The epoxy resin cured product according to <9>, in which, when the epoxy resin cured product is contacted with a decomposition agent containing a reducing agent and heated at 100°C for 48 hours, 80% by mass or more of the epoxy resin cured product is dissolved.
<11> An epoxy resin cured product, wherein, when the epoxy resin cured product is contacted with a decomposition agent containing a reducing agent and heated at 100°C for 48 hours, at least one compound containing a structure represented by the following formula (7) is produced:

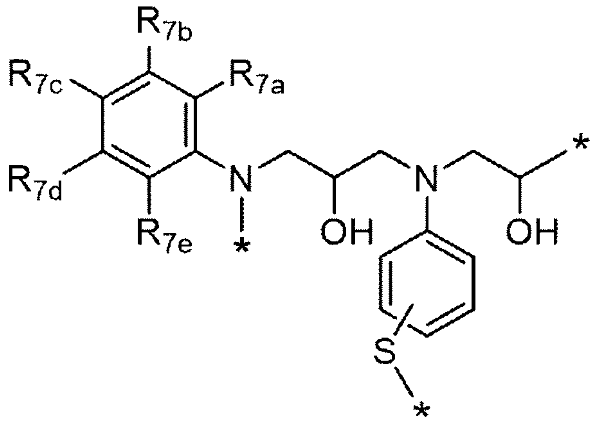

(7)

in formula (7), each of $R_{7a}$, $R_{7b}$, $R_{7c}$, $R_{7d}$, and $R_{7e}$ independently represents a hydrogen atom, an aliphatic hydrocarbon group having 1 to 20 carbon atoms, an alicyclic hydrocarbon group, an aromatic hydrocarbon group, an alkoxy group, an amino group, or a halogen atom, and * represents a bond.
<12> A prepreg, obtained by impregnating a fiber-reinforced substrate having reinforcing fibers with the epoxy resin composition according to any one of <1> to <8>,
in which a content of the reinforcing fibers is from 25% by volume to 75% by volume based on a total volume of the prepreg.
<13> A fiber-reinforced composite material, containing the epoxy resin cured product according to any one of <9> to <11> and a fiber-reinforced substrate having reinforcing fibers,
in which a content of the reinforcing fibers is from 25% by volume to 75% by volume based on a total volume of the fiber-reinforced composite material.
<14> A method for healing an epoxy resin cured product, the method including heating the epoxy resin cured product according to any one of <9> to <11>, which has a void therein, at a temperature equal to or higher than a glass transition temperature of the epoxy resin cured product, thereby healing the void.
<15> A method for healing a fiber-reinforced composite material, the method including heating the fiber-reinforced composite material according to <13>, which has a void therein, at a temperature equal to or higher than a glass transition temperature of the fiber-reinforced composite material, thereby healing the void.
<16> A method for remolding an epoxy resin cured product, the method including heating and pressurizing the epoxy resin cured product according to any one of <9> to <11>, at a temperature equal to or higher than a glass transition temperature of the epoxy resin cured product.
<17> A method for remolding a fiber-reinforced composite material, the method including heating and pressurizing the fiber-reinforced composite material according to <13>, at a temperature equal to or higher than a glass transition temperature of the fiber-reinforced composite material.
<18> A method for decomposing an epoxy resin cured product, the method including contacting the epoxy resin cured product according to any one of <9> to <11> with a decomposition agent containing a reducing agent.
<19> A method for recovering reinforcing fibers from a fiber-reinforced composite material, the method including contacting the fiber-reinforced composite material according to <13> with a decomposition agent containing a reducing agent.

Advantageous Effects of Invention

The present disclosure can provide an epoxy resin composition excellent in remoldability and self-healability of a cured product, despite the use of a compound that contains a dynamic covalent bonding site in an amount equal to or smaller than the theoretical equivalent with respect to the epoxy resin; an epoxy resin cured product resulting from curing of the aforementioned epoxy resin composition; a prepreg; a fiber-reinforced composite material; a method for healing the

epoxy resin cured product; a method for healing the fiber-reinforced composite material; a method for remolding the epoxy resin cured product; a method for remolding the fiber-reinforced composite material, a method for decomposing the epoxy resin cured product; and a method for recovering reinforcing fibers from the fiber-reinforced composite material.

BRIEF DESCRIPTION OF THE DRAWINGS

Fig. 1 is a graph illustrating results of stress relaxation measurement.
Fig. 2 is a graph illustrating results of stress relaxation mode separation analysis.
Fig. 3 illustrates a result of Fourier transform infrared spectroscopy (FT-IR, the same applies hereinafter) of a decomposition product of an epoxy resin cured product.

DESCRIPTION OF EMBODIMENTS

Hereinafter, an embodiment of the present disclosure will be described in detail. The present disclosure is, however, not limited to the embodiment below. In the following disclosure, the constituent elements (including element steps and the like) are not essential unless otherwise specified. The same applies to numerical values and ranges thereof, without limiting the present disclosure.

In the present disclosure, each numerical range indicated with use of "to" includes numerical values described before and after "to", as a lower limit value and an upper limit value, respectively.

With respect to the numerical ranges described stepwise in the present disclosure, the upper limit value or the lower limit value described in one numerical range may be replaced with the upper limit value or the lower limit value of another numerical range described stepwise. With respect to the numerical ranges described in the present disclosure, the upper limit value or the lower limit value described in a certain numerical range may be replaced with values described in Examples.

In a case where multiple kinds of substance that correspond to each component are present in the composition, the percentage of content of each component is defined, in the present disclosure, to mean the total amount of such multiple kinds of substance, unless otherwise specified.

In the present disclosure, a plurality of elements, enumerated with use of "or", does not exclude selection of any combination of the elements, unless there is any technical contradiction and unless otherwise specified.

Any element, even if denoted in a singular form in the present disclosure, does not exclude presence of a plurality of elements, unless there is any technical contradiction and unless otherwise specified.

In the present disclosure, a plurality of exemplary aspects described separately may be combined to constitute a new aspect, unless there is any contradiction.

<< Epoxy Resin Composition >>

The epoxy resin composition of the present disclosure contains at least an epoxy resin [A] and a curing agent [B], wherein the epoxy resin [A] contains at least a diglycidylamine-type epoxy resin [A1] represented by formula (1), and the curing agent [B] contains at least a curing agent [B1] that contains a dynamic covalent bonding site Y.

The epoxy resin composition of the present disclosure is excellent in remoldability and self-healability of a cured product, despite the use of a compound that contains a dynamic covalent bonding site in an amount equal to or smaller than the theoretical equivalent with respect to the epoxy resin. In the present disclosure, the term "remoldability" means that a plurality of cured products adhere to each other, with no grain boundary observable on the surface, meanwhile the term "self-healability" means that cracks in the cured product disappear or shrink.

Operation of the epoxy resin composition of the present disclosure, although remains unclear, is presumably as follows.

In the present disclosure, the dynamic covalent bonding site means a covalent bonding site capable of causing exchange and/or recombination. In more detail, the dynamic covalent bonding site is a binding site where two sets of covalent bonds cleaved under heating can exchange the bonding partners to reversibly produce two new sets of covalent bonds based on new combinations.

The dynamic covalent bonding site is alternatively a binding site where a certain set of covalent bonds can reversibly recombine with another cleaved covalent bond under heating, to cause recombination.

That is, the epoxy resin cured product, which is a cured product of the epoxy resin composition of the present disclosure, can continuously change the molecular network inside the epoxy resin cured product, as a result of reversible cleavage of the dynamic covalent bonding site under heating, to cause the exchange and/or recombination, and therefore excels in the fluidity, remoldability, and self-healability.

By the way, in general, since an amino group has a nucleophilic property, a nucleophilic substitution reaction proceeds with respect to a specific active bond, thereby promoting dissociation of the target bond. On the other hand, tertiary amino group which also excels in leaving ability, and a quaternary ammonium species generated by the nucleophilic substitution reaction is extremely electrophilic, thus causing the nucleophilic substitution reaction to proceed again, with other relatively mild nucleophile. The tertiary amino group may eventually act like a catalyst in two cycles of nucleophilic substitution reactions, and this may occasionally promote bond exchange at the specific bond.

In the epoxy resin composition of the present disclosure, the amino group contained in the glycidylamine-type epoxy resin having a specific structure causes the aforementioned effect, and this lowers activation energy of the bond exchange reaction at the dynamic covalent bonding site, to promote the bond exchange reaction. As the result, the cured product comes to have fluidity, and remoldability and self-healability are effectively exhibited.

As described above, the present disclosure can provide an epoxy resin composition excellent in remoldability and self-healability of a cured product, due to the aforementioned mechanism, despite the use of a compound that contains a dynamic covalent bonding site in an amount equal to or smaller than the theoretical equivalent with respect to the epoxy resin.

Note that the present disclosure is by no means limited to this predicted mechanism.

< Epoxy Resin [A] >

The epoxy resin composition of the present disclosure contains the epoxy resin [A].

The epoxy resin [A] contained in the epoxy resin composition of the present disclosure contains at least the diglycidylamine-type epoxy resin [A1] represented by formula (1).

**In** the present disclosure, the "diglycidylamine-type epoxy resin [A1] represented by formula (1)" is also simply referred to as "diglycidylamine-type epoxy resin [A1]".

< Diglycidylamine-Type Epoxy Resin [A1] >

The diglycidylamine-type epoxy resin [A1] is a diglycidylamine type epoxy resin represented by the following formula (1):

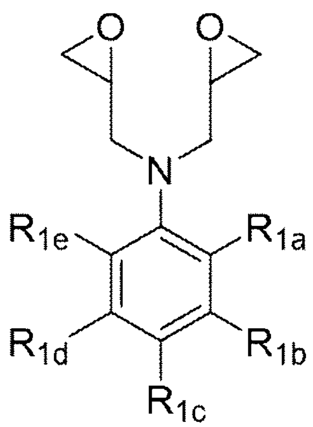

(1)

in formula (1), each of $R_{1a}$, $R_{1b}$, $R_{1c}$, $R_{1d}$, and $R_{1e}$ independently represents a hydrogen atom, an aliphatic hydrocarbon group having 1 to 20 carbon atoms, an alicyclic hydrocarbon group, an aromatic hydrocarbon group, an alkoxy group, an amino group, or a halogen atom.

The aliphatic hydrocarbon group may have substituent on the alkyl chain, or may be unsubstituted.

The number of carbon atoms in the aliphatic hydrocarbon group, exclusive of the number of carbon atoms in the substituent, is 1 to 20, preferably 1 to 10, and more preferably 1 to 5.

Specific examples of the aliphatic hydrocarbon group include saturated aliphatic hydrocarbon groups such as methyl group, ethyl group, n-propyl group, isopropyl group, n-butyl group, s-butyl group, t-butyl group, pentyl group, hexyl group, octyl group, decyl group, dodecyl group, tetradecyl group, hexadecyl group, and octadecyl group; and unsaturated aliphatic hydrocarbon groups such as allyl group and vinyl group.

The alicyclic hydrocarbon group may have substituent on the ring, or may be unsubstituted.

The number of carbon atoms in the alicyclic hydrocarbon group, exclusive of the number of carbon atoms in the substituent, is preferably 4 to 18, and more preferably 5 to 10.

Specific examples of the alicyclic hydrocarbon group include cyclopentyl group, cyclohexyl group, cycloheptyl

group, cyclopentenyl group, and cyclohexenyl group.

The aromatic hydrocarbon group may have substituent on the aromatic ring, or may be unsubstituted.

The number of carbon atoms in the aromatic hydrocarbon group, exclusive of the number of carbon atoms in the substituent, is preferably 6 to 18, and more preferably 6 to 15.

Specific examples of the aromatic hydrocarbon group include aryl groups such as phenyl group and naphthyl group.

The alkoxy group may have substituent on the alkyl chain, or may be unsubstituted. The alkoxy group may be straight, branched, or cyclic.

The number of carbon atoms in the alkoxy group, exclusive of the number of carbon atoms in the substituent, is preferably 1 to 6, and more preferably 1 to 3.

Specific examples of the alkoxy group include methoxy group, ethoxy group, n-propyloxy group, isopropyloxy group, n-butyloxy group, isobutyloxy group, t-butyloxy group, n-pentyloxy group, n-hexyloxy group, and phenoxy group.

The alkoxy group is preferably methoxy group or phenoxy group.

The amino group may have substituent on the nitrogen atom, or may be unsubstituted.

Examples of the substituent, if present in the amino group, include alkyl group and aryl group.

The number of carbon atoms in the substituted amino group is preferably 1 to 20, and more preferably 1 to 12.

Specific examples of the amino group include dimethylamino group, diethylamino group, and diphenylamino group.

Specific examples of the halogen atom include fluorine atom, chlorine atom, bromine atom, and iodine atom.

The halogen atom is preferably fluorine atom or chlorine atom.

In formula (1), each of $R_{1a}$, $R_{1b}$, $R_{1c}$, $R_{1d}$, and $R_{1e}$ independently represents a hydrogen atom, an aliphatic hydrocarbon group having 1 to 5 carbon atoms, an aromatic hydrocarbon group, an alkoxy group, or a halogen atom; more preferably represents a hydrogen atom, a methyl group, or a methoxy group; and still more preferably represents a hydrogen atom or a methyl group.

In a preferred aspect of the diglycidylamine-type epoxy resin represented by formula (1), $R_{1a}$ represents a hydrogen atom or a methyl group, and each of $R_{1b}$, $R_{1c}$, $R_{1d}$ and $R_{1e}$ represents a hydrogen atom.

Specific examples of the diglycidylamine-type epoxy resin [A1] include diglycidyl aniline, diglycidyl-o-toluidine, diglycidyl-m-toluidine, diglycidyl-p-toluidine, diglycidyl-xylidine, diglycidyl-mesidine, diglycidyl-anisidine, diglycidyl-phenoxyaniline, and diglycidyl-naphthylamine.

Among them, the diglycidylamine-type epoxy resin [A1] is preferably at least one species selected from the group consisting of diglycidyl aniline, diglycidyl-o-toluidine, diglycidyl-m-toluidine, and diglycidyl-p-toluidine; and is more preferably at least one species selected from the group consisting of diglycidyl aniline and diglycidyl-o-toluidine.

The diglycidylamine-type epoxy resin [A1] may be a synthetic product, or may be a commercially available product.

Examples of the commercially available product of the diglycidylamine-type epoxy resin [A1] include GAN from Nippon Kayaku Co., Ltd., GOT from Nippon Kayaku Co., Ltd., and EP-3980S from ADEKA Corporation.

The epoxy resin [A] may contain only one kind of diglycidylamine-type epoxy resin [A1], or two or more kinds thereof.

An average epoxy equivalent of the diglycidylamine-type epoxy resin [A1] is not particularly limited, but is preferably from 80 g/eq to 300 g/eq, more preferably from 85 g/eq to 200 g/eq, still more preferably from 90 g/eq to 150 g/eq, and particularly preferably from 100 g/eq to 120 g/eq.

In the present disclosure, the "average epoxy equivalent of the diglycidylamine-type epoxy resin [A1]" means the weighted average epoxy equivalent of all the diglycidylamine-type epoxy resins [A1] contained in the epoxy resin composition of the present disclosure.

The epoxy equivalent of the diglycidylamine-type epoxy resin [A1 ] is a value measured by a method in accordance with JIS K 7236:2009 (ISO 3001:1999).

< Epoxy Resin Other Than Diglycidylamine-Type Epoxy Resin [A1] >

The epoxy resin [A] may contain any of the known epoxy resins, besides the diglycidylamine-type epoxy resin [A1].

The epoxy resin other than the diglycidylamine-type epoxy resin [A1] may be monofunctional, bifunctional, or polyfunctional.

The epoxy resin other than the diglycidylamine-type epoxy resin [A1] may be, for example, a glycidyl ether compound or a glycidyl ester compound.

The epoxy resin other than the diglycidylamine-type epoxy resin [A1] is not particularly limited as long as it reacts with the curing agent [B], and is appropriately selected according to the purpose of use and the like.

Examples of the epoxy resin other than the diglycidylamine-type epoxy resin [A1] include tetrafunctional

glycidylamine-type epoxy resin, bifunctional glycidyl ether-type epoxy resin, polyfunctional glycidyl ether-type epoxy resin, glycidyl ester-type epoxy resin, and trifunctional epoxy resin.

Specific examples of the tetrafunctional glycidylamine-type epoxy resin include tetraglycidyl-4,4'-diaminodiphenylmethane, tetraglycidyl-4,4'-diaminodiphenylsulfone, tetraglycidyl-3,3'-diaminodiphenylsulfone, tetraglycidyl-4,4'-diaminodiphenyl ether, tetraglycidyl-3,4'-diaminodiphenyl ether, and tetraglycidyl-4,4'-dithiodianiline, and derivatives thereof.

Specific examples of the bifunctional glycidyl ether-type epoxy resin include bisphenol A-diglycidyl ether, bisphenol F-diglycidyl ether, bisphenol S-diglycidyl ether, resorcinol diglycidyl ether, 1,6-naphthalenediol diglycidyl ether, and 4,4'-dithiodiphenol diglycidyl ether, and derivatives thereof.

Specific examples of the polyfunctional glycidyl ether-type epoxy resin include phenol novolac-type epoxy resin and cresol novolac-type epoxy resin, and derivatives thereof.

Specific examples of the glycidyl ester-type epoxy resin include phthalic acid diglycidyl ester, hexahydrophthalic acid diglycidyl ester, dimer acid diglycidyl ester, and derivatives thereof.

Specific examples of the trifunctional epoxy resin include triglycidyl-m-aminophenol, triglycidyl-p-aminophenol, and triglycidyl isocyanurate, and derivatives thereof.

Among these epoxy resins, the bifunctional glycidyl ether-type epoxy resin is particularly preferred, due to excellence in handleability of the epoxy resin composition, and in remoldability of the epoxy resin cured product.

The epoxy resin other than the diglycidylamine-type epoxy resin [A1] may be a synthetic product, or may be a commercially available product.

Examples of the commercially available product of the epoxy resin other than the diglycidylamine-type epoxy resin [A1] include "jER825", "jER828" and "jER834" which are bisphenol A-diglycidyl ethers from Mitsubishi Chemical Corporation; and "jER806" which is bisphenol F-diglycidyl ether from Mitsubishi Chemical Corporation.

The epoxy resin [A], if containing the epoxy resin other than the diglycidylamine-type epoxy resin [A1], may contain only one kind of the epoxy resin other than the diglycidylamine-type epoxy resin [A1], or two or more kinds thereof.

An average epoxy equivalent of the epoxy resin [A] is not particularly limited, but is preferably from 80 g/eq to 1000 g/eq, more preferably from 90 g/eq to 500 g/eq, and still more preferably from 100 g/eq to 300 g/eq.

In the present disclosure, the "average epoxy equivalent of the epoxy resin [A]" means the weighted average epoxy equivalent of all the epoxy resins [A] contained in the epoxy resin composition of the present disclosure.

The epoxy equivalent of the epoxy resin [A] is a value measured by a method in accordance with JIS K 7236:2009 (ISO 3001:1999).

Proportion of the diglycidylamine-type epoxy resin [A1] contained in the epoxy resin [A] is not particularly limited, and is appropriately adjusted according to the type of the diglycidylamine-type epoxy resin [A1], the type of the curing agent [B], required characteristics of the cured product, and the like.

A ratio (a1)/(a), defined as a molar amount (a1) of epoxy groups in the diglycidylamine-type epoxy resin [A1] relative to a molar amount (a) of epoxy groups in the epoxy resin [A], is not particularly limited, but is preferably from 0.05 to 1.0, more preferably from 0.05 to 0.8, still more preferably from 0.05 to 0.6, particularly preferably from 0.2 to 0.5, and most preferably from 0.3 to 0.5.

When the ratio (a1)/(a) is 0.05 or more, the performance attributable to the dynamic covalent bond site Y in the epoxy resin cured product is more effectively exhibited, and thus the cured product tends to exhibit improved remoldability and self-healability.

When the ratio (a1)/(a) is 1.0 or less, an increase in free volume attributable to glycidylamine is suppressed, and thus the mechanical properties of the cured product, particularly strength, tend to be improved.

[Method for Synthesizing Epoxy Resin [A]]

When synthesizing the epoxy resin [A], the method for synthesizing the epoxy resin [A] is not particularly limited. The epoxy resin [A] may be synthesized by any method. An exemplary synthesis may be such as allowing a raw material, which is aromatic amine, aminophenol, or diphenol for example, to react with epihalohydrin such as epichlorohydrin, to obtain halohydrin, and then subjecting the obtained halohydrin to a cyclization reaction with use of an alkaline compound.

< Curing agent [B] >

The epoxy resin composition of the present disclosure contains the curing agent [B].

The curing agent [B] contained in the epoxy resin composition of the present disclosure contains at least a curing agent [B1] that contains the dynamic covalent bonding site Y.

< Curing agent [B1] >

The curing agent [B1] is not particularly limited as long as it contains the dynamic covalent bonding site Y.

The curing agent [B1] may be amine-based curing agent, acid anhydride curing agent, phenol-based curing agent, or polyamide-based curing agent.

Examples of the amine-based curing agent include aliphatic amine-based curing agent and aromatic amine-based curing agent.

The phenol-based curing agent is preferred for its low curing activity at room temperature, excellent latency, and tendency of yielding a cured product with high heat resistance. The aliphatic amine-based curing agent is more preferred, because it is synthesizable and available at low costs, and tends to excel in economy. The acid anhydride curing agent is still more preferred, for its long shelf stability, and tendency of yielding a cured product that is relatively well balanced among electrical, chemical, and mechanical properties. The aromatic amine-based curing agent is particularly preferred, for its tendency of yielding a cured product that excels in all of heat resistance, mechanical property, electrical property, and chemical resistance.

The curing agent [B1] contains a dynamic covalent bonding site Y.

The dynamic covalent bonding site Y is not particularly limited.

The dynamic covalent bonding site Y is preferably a group that contains at least one selected from the group consisting of ester bond, imine bond, urethane bond, carbonate bond, vinylogous urethane bond, boronate ester bond, silyl ether bond, and disulfide bond.

From the viewpoint of non-necessity of any catalyst for promoting exchange and/or recombination, the dynamic covalent bonding site Y is more preferably a group that contains at least one selected from the group consisting of imine bond, silyl ether bond, and disulfide bond. Moreover from the viewpoint of extremely high rate of exchange and/or recombination, the dynamic covalent bonding site Y is preferably a group that contains disulfide bond, and is more preferably disulfide bond.

The urethane bond, carbonate bond, vinylogous urethane bond, boronate ester bond, silyl ether bond, and disulfide bond can reversibly cause cleavage under heating of two sets of covalent bonds, and subsequent formation of two new combinations of covalent bonds by exchanging their bonding partners, that is, dissociation of the two sets of covalent bonds all at once, followed by recombination.

On the other hand, the ester bond and the imine bond can cause certain one set of covalent bonds to reversibly recombine and exchange with another cleaved certain covalent bond, that is, reversibly causing concurrent cleavage and recombination, without needing dissociation of all the two sets of covalent bonds at a time.

The dynamic covalent bonding site Y preferably causes bond exchange in a concerted manner without cleavage.

Examples of the dynamic covalent bonding site Y that causes bond exchange in a concerted manner without cleavage include disulfide bond, ester bond, boronate ester bond, imine bond, and vinylogous urethane bond.

The ester bond is represented by the following formula (Y-1), the imine bond is represented by the following formula (Y-2), the urethane bond is represented by the following formula (Y-3), the carbonate bond is represented by the following formula (Y-4), the vinylogous urethane bond is represented by the following formula (Y-5), the boronate ester bond is represented by the following formula (Y-6) or (Y-7), the silyl ether bond is represented by the following formula (Y-8), and the disulfide bond is represented by the following formula (Y-9):

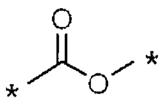
(Y-1)

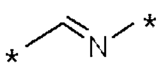
(Y-2)

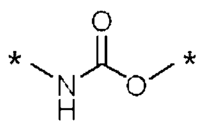
(Y-3)

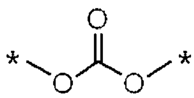
(Y-4)

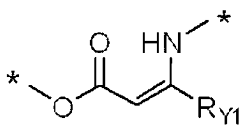
(Y-5)

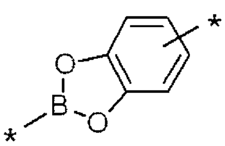
(Y-6)

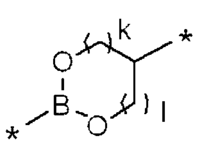
(Y-7)

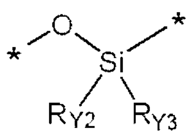
(Y-8)

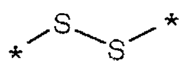
(Y-9)

In formulae (Y-1) to (Y-9), * represents a bond.

In formula (Y-5), $R_{Y1}$ preferably represents an aliphatic hydrocarbon group, an aromatic hydrocarbon group, or

an alkoxy group; more preferably represents an aliphatic hydrocarbon group having 1 to 4 carbon atoms, or an aromatic hydrocarbon group; and still more preferably represents a methyl group, an ethyl group, or a phenyl group.

In formula (Y-7), it is preferred that each of k and 1 independently represents an integer of 0 to 10, the integer is more preferably 0 to 5, and still more preferably 0 to 2.

In formula (Y-8), it is preferred that each of $R_{Y2}$ and $R_{Y3}$ independently represents an aliphatic hydrocarbon group, an aromatic hydrocarbon group, or an alkoxy group; more preferably represents an aliphatic hydrocarbon group having 1 to 4 carbon atoms, or an aromatic hydrocarbon group; and still more preferably represents a methyl group, an ethyl group, or a phenyl group.

The concentration (so-called mass molarity) of the dynamic covalent bonding site Y with respect to the total mass of the epoxy resin [A] and the curing agent [B] is not particularly limited, but is preferably from 0.05 mmol/g to 2.0 mmol/g, more preferably from 0.1 mmol/g to 1.5 mmol/g, and still more preferably from 0.2 mmol/g to 1.2 mmol/g.

When the concentration of the dynamic covalent bond site Y with respect to the total mass of the epoxy resin [A] and the curing agent [B] is 0.05 mmol/g or more, remoldability and self-healability tend to be more effectively exhibited.

When the concentration of the dynamic covalent bond site Y with respect to the total mass of the epoxy resin [A] and the curing agent [B] is 2.0 mmol/g or less, the mechanical properties tend to be less likely to be impaired.

The curing agent [B1] preferably contains a compound (so-called amine-based curing agent) represented by the following formula (2), and is more preferably a compound represented by the following formula (2):

$$H_2N\text{-}R_1\text{-}Y\text{-}R_2\text{-}NH_2 \qquad (2)$$

In formula (2), each of $R_1$ and $R_2$ independently represents an aliphatic hydrocarbon group having 1 to 20 carbon atoms, an alicyclic hydrocarbon group, an aromatic hydrocarbon group, an ether group, or a divalent group formed of combination of two or more species selected from the group consisting of aliphatic hydrocarbon group having 1 to 20 carbon atoms, alicyclic hydrocarbon group, aromatic hydrocarbon group, and ether group. Y represents a dynamic covalent bonding site.

The compound represented by formula (2) is an amine-based curing agent in which the dynamic covalent bonding site Y and two amino groups are bound while placing $R_1$ and $R_2$ in between.

The number of carbon atoms in the aliphatic hydrocarbon group is preferably 1 to 20, more preferably 1 to 18, still more preferably 2 to 12, and yet more preferably 2 to 6.

Specific examples of the aliphatic hydrocarbon group include saturated aliphatic hydrocarbon groups such as methyl group, ethyl group, n-propyl group, isopropyl group, n-butyl group, s-butyl group, t-butyl group, pentyl group, hexyl group, octyl group, decyl group, dodecyl group, tetradecyl group, hexadecyl group, and octadecyl group; and unsaturated aliphatic hydrocarbon groups such as allyl group and vinyl group.

The number of carbon atoms in the alicyclic hydrocarbon group is preferably 4 to 18, and more preferably 5 to 10.

Specific examples of the alicyclic hydrocarbon group include cyclopentyl group, cyclohexyl group, cycloheptyl group, cyclopentenyl group, and cyclohexenyl group.

The number of carbon atoms in the aromatic hydrocarbon group is preferably 6 to 18, more preferably 6 to 15, and still more preferably 6 to 12.

Specific examples of the aromatic hydrocarbon group include aryl groups such as phenyl group and naphthyl group.

Specific examples of the divalent group formed of combination of two or more species selected from the group consisting of aliphatic hydrocarbon group having 1 to 20 carbon atoms, alicyclic hydrocarbon group, aromatic hydrocarbon group, and ether group include $-(CH_2\text{-}CH_2\text{-}O)_{3}\text{-}$, $-C_6H_4\text{-}O\text{-}C_6H_4\text{-}$, and $-C_6H_4\text{-}O\text{-}C_2H_4\text{-}$.

In formula (2), it is preferred that each of $R_1$ and $R_2$ independently represents an aliphatic hydrocarbon group having 1 to 6 carbon atoms, or an aromatic hydrocarbon group having 6 to 12 carbon atoms, and more preferably represents an ethyl group, an n-propyl group, or a phenyl group.

In formula (2), Y preferably represents an imine bond, a disulfide bond, or a silyl ether bond, more preferably represents a disulfide bond or a silyl ether bond, and still more preferably represents a disulfide bond.

The curing agent [B1] is preferably a compound that contains an Ar-S-S-Ar structure, and specific examples thereof include a compound (so-called amine-based curing agent) represented by the following formula (3) and a compound (so-called phenol-based curing agent) represented by the following formula (4), both having the dynamic covalent bonding site Y, defined as a disulfide bond (Y-9).

From the viewpoint of heat resistance of the obtainable cured product, the curing agent [B1] preferably contains a compound represented by (3), and is more preferably a compound represented by (3):

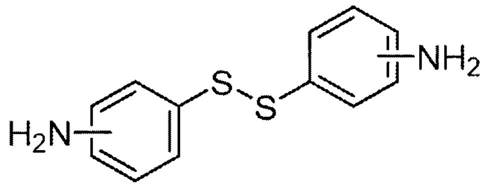

(3)

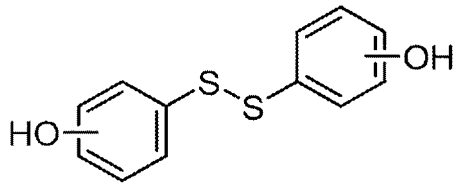

(4)

Of the compound represented by formula (3), the curing agent [B1] is preferably a compound represented by the following formula (3-1), from the viewpoint of the heat resistance of the obtainable cured product.

Of the compound represented by formula (4), the curing agent [B1] is preferably a compound represented by the following formula (4-1), from the viewpoint of the heat resistance of the obtainable cured product:

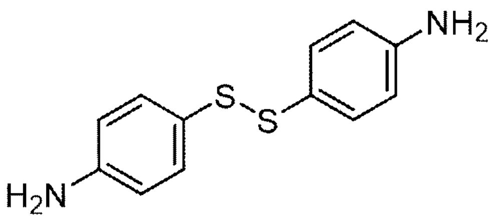

(3-1)

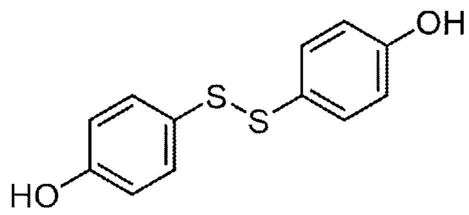

(4-1)

Other examples of the curing agent [B1] include a compound represented by the following formula (5), and a compound represented by the following formula (6), both having the dynamic covalent bonding site Y, defined as a silyl ether bond (Y-8):

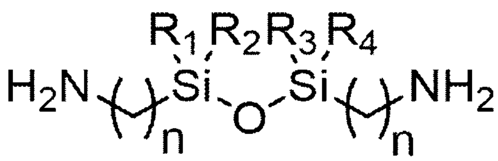

(5)

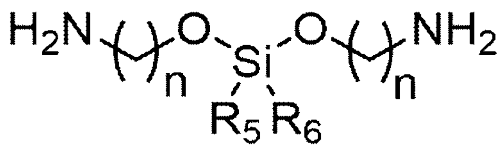

(6)

In formula (5), each of $R_1$, $R_2$, $R_3$, and $R_4$ independently represents an aliphatic hydrocarbon group having 1 to 20 carbon atoms, an alicyclic hydrocarbon group, an aromatic hydrocarbon group, an alkoxy group, or a monovalent group formed of combination of two or more species selected from the group consisting of aliphatic hydrocarbon group having 1 to 20 carbon atoms, alicyclic hydrocarbon group, aromatic hydrocarbon group, and alkoxy group. n represents an integer of 1 to 20.

The number of carbon atoms in the aliphatic hydrocarbon group is 1 to 20, preferably 1 to 6, more preferably 1 to 4, and still more preferably 1 to 3.

Specific examples of the aliphatic hydrocarbon group include saturated aliphatic hydrocarbon groups such as methyl group, ethyl group, n-propyl group, isopropyl group, n-butyl group, s-butyl group, t-butyl group, pentyl group, hexyl group, octyl group, decyl group, dodecyl group, tetradecyl group, hexadecyl group, and octadecyl group; and unsaturated aliphatic hydrocarbon groups such as allyl group and vinyl group.

The number of carbon atoms in the alicyclic hydrocarbon group is preferably 4 to 18, and more preferably 5 to 10.

Specific examples of the alicyclic hydrocarbon group include cyclopentyl group, cyclohexyl group, cycloheptyl group, cyclopentenyl group, and cyclohexenyl group.

The number of carbon atoms in the aromatic hydrocarbon group is preferably 6 to 18, more preferably 6 to 15, still more preferably 6 to 12, and yet more preferably 6 to 10.

Specific examples of the aromatic hydrocarbon group include aryl groups such as phenyl group and naphthyl group.

The alkoxy group may be straight, branched, or cyclic.

The number of carbon atoms in the alkoxy group is preferably 1 to 6, and more preferably 1 to 3.

Specific examples of the alkoxy group include methoxy group, ethoxy group, n-propyloxy group, isopropyloxy group, n-butyloxy group, isobutyloxy group, t-butyloxy group, n-pentyloxy group, and n-hexyloxy group.

Specific examples of the monovalent group formed of combination of two or more species selected from the group consisting of aliphatic hydrocarbon group having 1 to 20 carbon atoms, alicyclic hydrocarbon group, aromatic hydrocarbon group, and alkoxy group include $-CH_2-Ph$, $-CH_2-O-Ph$, and $-CH_2-O-C_6H_{12}$. In the present disclosure, "Ph" represents phenyl.

In formula (5), it is preferred that each of $R_1$, $R_2$, $R_3$, and $R_4$ independently represents an aliphatic hydrocarbon group having 1 to 6 carbon atoms, or an aromatic hydrocarbon group having 6 to 12 carbon atoms; more preferably represents an aliphatic hydrocarbon group having 1 to 4 carbon atoms, or an aromatic hydrocarbon group having 1 to 10 carbon atoms; and still more preferably represents a methyl group, an ethyl group, or a phenyl group.

In formula (5), n preferably represents an integer of 1 to 12, more preferably represents an integer of 2 to 8, and still more preferably represents an integer of 2 to 6.

In formula (5), two pieces of n may be the same or different.

In formula (6), each of $R_5$ and $R_6$ independently represents a hydrocarbon group having 1 to 20 carbon atoms, an alicyclic hydrocarbon group, an aromatic hydrocarbon group, or an alkoxy group. n represents an integer of 1 to 20.

In formula (6), it is preferred that each of $R_5$ and $R_6$ independently represents an aliphatic hydrocarbon group having 1 to 6 carbon atoms, or an aromatic hydrocarbon group having 6 to 12 carbon atoms; more preferably represents an aliphatic hydrocarbon group having 1 to 4 carbon atoms, or an aromatic hydrocarbon group having 1 to 10 carbon atoms; and still more preferably represents a methyl group, an ethyl group, or a phenyl group.

In formula (6), n preferably represents an integer of 1 to 12, more preferably represents an integer of 2 to 8, and still more preferably represents an integer of 2 to 6.

In formula (6), two pieces of n may be the same or different.

Of the compound represented by formula (5), the curing agent [B1] is preferably a compound represented by formula (5-1), from the viewpoint of the remoldability and the self-healability of the obtainable cured product:

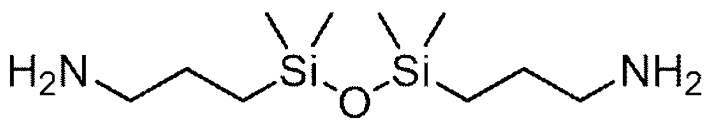

(5-1)

The molecular weight of the curing agent [B1] is not particularly limited, but is preferably from 100 to 1000, more preferably from 100 to 500, and still more preferably from 100 to 300.

In the present disclosure, the molecular weight of the curing agent [B1] is a value determined by mass spectrometry.

The curing agent [B1] preferably contains active hydrogens.

When the curing agent [B1] contains active hydrogens, the active hydrogen equivalent is not particularly limited, but is preferably from 25 g/eq to 250 g/eq, more preferably from 25 g/eq to 150 g/eq, and still more preferably from 25 g/eq to 100 g/eq.

In the present disclosure, the active hydrogen equivalent of the curing agent [B1] is a value determined from the amount of active hydrogen group contained in the curing agent [B1] (so-called active hydrogen value), by the following equation:

$$[\text{Active hydrogen equivalent}] = 56.1 \times 1000 \div [\text{Active hydrogens value}]$$

For the amine-based curing agent, the active hydrogens value is an amine value determined by a method in accordance with JIS K 7237:1995 (ASTM E222-23); meanwhile for the phenol-based curing agent, the value is a hydroxy value determined by a method in accordance with JIS K 0070:1992 (ASTM D2896-15).

The remoldability and the self-healability of the epoxy resin cured product, which is a cured product of the epoxy resin composition of the present disclosure, are presumably ascribed to the dynamic covalent bonding site Y and the like contained in the curing agent [B1]. The high heat resistance, elastic modulus, and strength of the epoxy resin cured product, which is a cured product of the epoxy resin composition of the present disclosure, are presumably ascribed to the rigid aromatic ring contained in the aforementioned formula (3) or (4).

Proportion of the curing agent [B1] contained in the curing agent [B] is not particularly limited, and is appropriately

adjusted according to the type of the curing agent [B1], required characteristics of the cured product, and the like.

(Ratio (b1)/(b))

The ratio (b1)/(b), defined as a molar amount (b1) of active hydrogens in the curing agent [B1] relative to a molar amount (b) of active hydrogens in the curing agent [B], is not particularly limited, but is preferably from 0.1 to 1.0, more preferably from 0.4 to 1.0, still more preferably from 0.7 to 1.0, particularly preferably from 0.9 to 1.0, and most preferably 1.0.

When the ratio (b1)/(b) is 0.1 or more, the performance attributable to the dynamic covalent bond site Y in the epoxy resin cured product is more effectively exhibited, and thus the cured product tends to exhibit improved remoldability and self-healability.

In the present disclosure, the "molar amount (b) of active hydrogens in the curing agent [B]" means the total molar amount of active hydrogens derived from the curing agent [B] (also referred to as "molar amount of the total active hydrogens of the curing agent [B]", hereinafter).

The molar amount of the total active hydrogens of the curing agent [B] is determined from the sum of the molar amount of active hydrogens derived from the curing agent [B1], and the molar amount of active hydrogens derived from any curing agent other than the curing agent [B1], contained in the epoxy resin composition.

The "molar amount of active hydrogens derived from the curing agent [B1]" is determined by dividing the molar amount of the curing agent [B1] contained in the epoxy resin composition, by the number of active hydrogens contained in one molecule of a compound which is the curing agent [B1]. The "molar amount of active hydrogens derived from any curing agent other than the curing agent [B1]" is determined by dividing the molar amount of any curing agent other than the curing agent [B1] contained in the epoxy resin composition, by the number of active hydrogens contained in one molecule of a compound which is any curing agent other than the curing agent [B1].

< Curing agent Other Than Curing agent [B1] >

The curing agent [B] may contain a known curing agent for curing the epoxy resin, besides the curing agent [B1].

The curing agent other than the curing agent [B1] is not particularly limited as long as it can cure the epoxy resin, and is appropriately selected according to the purpose of use and the like.

The curing agent other than the curing agent [B1] may contain active hydrogens.

Specific examples of the curing agent other than the curing agent [B1] include dicyandiamide, phenol-based curing agent free of the dynamic covalent bonding site Y and various isomers thereof, aromatic amine-based curing agent free of the dynamic covalent bonding site Y and various isomers thereof, and aminobenzoic acid ester compound.

Dicyandiamide is preferred since a prepreg described later has excellent shelf stability.

Among the aromatic amine-based curing agents free of the dynamic covalent bonding site Y, aromatic diamine compounds such as 4,4'-diaminodiphenylsulfone, 3,3'-diaminodiphenylsulfone, and 4,4'-diaminodiphenylmethane, and derivatives thereof having non-reactive substituent are preferred, since the cured product having high heat resistance can be obtained. Among the aromatic diamine compounds, 3,3'-diaminodiphenylsulfone is most preferred, since the cured product having high heat resistance and a high elastic modulus can be obtained.

Examples of the non-reactive substituent include alkyl groups such as methyl group, ethyl group, and isopropyl group; aromatic group such as phenyl group; alkoxy group; aralkyl group; and halogen groups such as chlorine and bromine.

(Total Amount of Curing agent [B])

The total amount of the curing agent [B] contained in the epoxy resin composition of the present disclosure is not particularly limited as long as the amount is suitable for curing all the epoxy resins [A] contained in the epoxy resin composition, and is appropriately adjusted according to the type of the epoxy resin [A] or the curing agent [B].

(Total Amount of Epoxy Resin [A] and Curing Agent [B])

The total amount of the epoxy resin [A] and the curing agent [B] in the epoxy resin composition of the present disclosure is not particularly limited, but is preferably from 50% by mass to less than 100% by mass, more preferably from 70% by mass to less than 100% by mass, and still more preferably from 90% by mass to less than 100% by mass, based on the total mass of the epoxy resin composition.

(Ratio (b)/(a))

The ratio (b)/(a), defined as a molar amount (b) of active hydrogens in the curing agent [B] relative to a molar amount (a) of epoxy groups in the epoxy resin [A], is not particularly limited, but is preferably from 0.5 to 2.0, more preferably from 0.75 to 1.5, still more preferably from 0.9 to 1.2, and particularly preferably 1.0.

When the ratio (b)/(a) is within the above range, the molar amounts of the epoxy groups in the epoxy resin [A] and the active hydrogens in the curing agent [B] are well balanced, and thus an epoxy resin cured product having a sufficient crosslinking density is obtained, and the mechanical properties of the epoxy resin cured product, including heat resistance, elastic modulus, and fracture toughness, tend to be further improved.

In the present disclosure, the "molar amount (a) of epoxy group in the epoxy resin [A] " means the total molar amount of epoxy groups present in the epoxy resin [A] (also referred to as "molar amount of all epoxy groups in the epoxy resin [A]", hereinafter).

The molar amount of all epoxy groups in the epoxy resin [A] is determined from the sum of the molar amounts of epoxy groups, each determined by dividing the mass of each epoxy resin [A] contained in the epoxy resin composition by each epoxy equivalent.

(Ratio (b1)/(a))

The ratio (b1)/(a), defined as a molar amount (b1) of active hydrogens in the curing agent [B1] relative to a molar amount (a) of epoxy groups in the epoxy resin [A], is preferably from 0.6 to 1.5, more preferably from 0.8 to 1.2, still more preferably from 0.9 to 1.1, and particularly preferably 1.0.

When the ratio (b1)/(a) is 0.6 or more, the performance attributable to the dynamic covalent bond site Y is effectively exhibited, and thus the cured product tends to exhibit improved remoldability and self-healability.

When the ratio (b1)/(a) is 1.5 or less, the molar amounts of the epoxy groups in the epoxy resin [A] and the active hydrogens in the curing agent [B1] are appropriately balanced, and thus an epoxy resin cured product having a sufficiently high crosslinking density is obtained, and the mechanical properties of the epoxy resin cured product, including heat resistance, elastic modulus, and fracture toughness, tend to be further improved.

The ratio (b1)/(a) may be confirmed by $^1$H-NMR analysis of the epoxy resin composition, from a ratio of integral areas of peaks attributable to the epoxy group and active hydrogens in an obtained $^1$H-NMR spectrum.

In the present disclosure, the use of a compound that contains a theoretical equivalent amount, with respect to the epoxy resin, of the dynamic covalent bonding site means that the compound, containing the dynamic covalent bonding site, is used in an amount such that the molar amount of active hydrogens of the compound that contains the dynamic covalent bonding site is 1, with respect to 1 mole of epoxy groups in the epoxy resin, in this case, the ratio (b1)/(a) is 1.0.

In the present disclosure, the use of a compound that contains a theoretical equivalent or less amount, with respect to the epoxy resin, of the dynamic covalent bonding site means that the ratio (b1)/(a) is 1.0 or smaller.

< Curing Accelerator >

The epoxy resin composition of the present disclosure may contain a curing accelerator, besides the aforementioned epoxy resin [A] and the curing agent [B].

The curing accelerator accelerates a curing reaction of the epoxy resin composition and the prepreg impregnated therewith, and forms a cured product having large elastic modulus and strength in a short production time.

The curing accelerator is not particularly limited as long as it accelerates the curing reaction of the epoxy resin [A] and the curing agent [B], and examples thereof include nitrogen-containing heterocyclic compounds such as imidazole compound and tertiary amine compound, and onium salt thereof; phosphine compound;, and phosphonium salt thereof.

Specific examples of the curing accelerator include imidazole compounds such as 2-ethyl-4-methylimidazole and 1-(2-cyanoethyl)-2-phenylimidazole, and salts that contain these compounds; tertiary amine compounds such as diazabicycloundecene, diazabicyclononene and tris(dimethylaminomethyl)phenol, and salts that contain these compounds; phosphine compounds such as triphenylphosphine and tri(o-tolyl)phosphine; and phosphonium salts such as tetraphenylphosphonium tetraphenylborate.

The content of the curing accelerator, when contained in the epoxy resin composition of the present disclosure, is not particularly limited, and is appropriately set as necessary.

< Other Components >

The epoxy resin composition of the present disclosure may contain components (so-called other components), besides the epoxy resin [A] and the curing agent [B] which are the essential components, and the curing accelerator which is an optional component.

Examples of such other components include thermoplastic resin, conductive particle, flame retardant, inorganic filler, and internal mold release agent.

The thermoplastic resin improves fracture toughness and impact resistance of the obtainable fiber-reinforced composite material.

Examples of the thermoplastic resin include epoxy resin-soluble thermoplastic resin and epoxy resin-insoluble thermoplastic resin.

The epoxy resin-soluble thermoplastic resin controls viscosity of the epoxy resin composition, to improve the impact resistance of the obtainable fiber-reinforced composite material.

Examples of the epoxy resin-soluble thermoplastic resin include polyethersulfone, polysulfone, polyetherimide, and polycarbonate.

The epoxy resin-soluble thermoplastic resin preferably contains at least one species selected from polyethersulfone and polysulfone, and is more preferably at least one species selected from polyethersulfone and polysulfone.

The epoxy resin composition of the present disclosure, if containing the epoxy resin-soluble thermoplastic resin as the thermoplastic resin, may contain only one kind of the epoxy resin-soluble thermoplastic resin, or two or more kinds thereof.

The epoxy resin-soluble thermoplastic resin preferably has a weight-average molecular weight (Mw), as measured by gel permeation chromatography, of from 8000 to 100000.

When the weight-average molecular weight (Mw) of the epoxy resin-soluble thermoplastic resin is 8000 or more, the resulting fiber-reinforced material tends to have further improved impact resistance. On the other hand, when the weight-average molecular weight (Mw) is 100000 or less, the epoxy resin composition does not have an excessively high viscosity and is easily handleable.

The epoxy resin-soluble thermoplastic resin preferably has a narrow molecular weight distribution, as measured by gel permeation chromatography.
The polydispersity (Mw/Mn), defined as a ratio of the weight-average molecular weight (Mw) to the number-average molecular weight (Mn), is preferably from 1 to 10, and more preferably from 1.1 to 5.

The epoxy resin-soluble thermoplastic resin preferably has a reactive group which is reactive with the epoxy resin, or a functional group capable of forming a hydrogen bond. This sort of epoxy resin-soluble thermoplastic resin can improve dissolution stability of the epoxy resin during the curing process. This sort of epoxy resin-soluble thermoplastic resin can also add toughness, chemical resistance, heat resistance, and moist heat resistance, to the fiber-reinforced composite material obtainable after being cured.

The reactive group which is reactive with the epoxy resin is preferably hydroxyl group, carboxylic acid group, imino group, or amino group, for example, although not particularly limited.

The epoxy resin-soluble thermoplastic resin is preferably a hydroxy-terminated polyethersulfone. With the hydroxy-terminated polyethersulfone contained as the epoxy resin-soluble thermoplastic resin in the epoxy resin composition of the present disclosure, the impact resistance, fracture toughness and solvent resistance of the resulting fiber-reinforced composite material tend to be further improved.

A part of the epoxy resin-insoluble thermoplastic resin or the epoxy resin-soluble thermoplastic resin (so-called epoxy resin-soluble thermoplastic resin that remained undissolved in the matrix resin after being cured) stays in a particle form dispersed in the matrix resin of the fiber-reinforced composite material. The thus dispersed particle suppresses the impact applied to the fiber-reinforced composite material from propagating, thereby improving the impact resistance of the obtainable fiber-reinforced composite material.

Examples of the epoxy resin-insoluble thermoplastic resin include polyamide, polyacetal, polyphenylene oxide, polyphenylene sulfide, polyester, polyamideimide, polyimide, polyether ketone, polyether ether ketone, polyethylene naphthalate, polyether nitrile, and polybenzimidazole.

Among them, polyamide, polyamideimide, and polyimide are preferred for their excellence in the toughness and heat resistance. Polyamide and polyimide particularly excel in the effect of improving the toughness of the fiber-reinforced composite material.

The epoxy resin composition of the present disclosure, if containing the epoxy resin-insoluble thermoplastic resin as the thermoplastic resin, may contain only one kind of the epoxy resin-insoluble thermoplastic resin, or two or more kinds thereof, or may contain a copolymer of two or more kinds of the aforementioned epoxy resin-insoluble thermoplastic resin.

In particular, amorphous polyimide; or polyamides such as nylon 6 (registered trademark) (polyamide obtained by so-called ring opening polycondensation reaction of caprolactam), nylon 11 (polyamide obtained by so-called ring opening polycondensation reaction of undecane lactam), nylon 12 (polyamide obtained by so-called ring opening polycondensation reaction of lauryl lactam), nylon 1010 (polyamide obtained by so-called copolymerization reaction of sebacic acid and 1,10-decanediamine), and amorphous nylon (also referred to as so-called clear nylon, causing no crystallization or causing extremely slow crystallization of polymer), can remarkably improve the heat resistance of the obtainable fiber-reinforced composite material.

Examples of the conductive particle include conductive polymer particles such as polyacetylene particle,

polyaniline particle, polypyrrole particle, polythiophene particle, polyisothianaphthene particle, and polyethylene dioxythiophene particle; carbon particle; carbon fiber particle; metal particle; and particle having a core formed of inorganic or organic material, which is covered with conductive substance.

Examples of the flame retardant include phosphorus-containing flame retardant.

The phosphorus-containing flame retardant is not particularly limited as long as it contains a phosphorus atom in the molecule.

Examples of the phosphorus-containing flame retardant include organic phosphorus compounds such as phosphate ester, condensed phosphate ester, phosphazene compound, and polyphosphate; and red phosphorus.

Examples of the inorganic filler include aluminum borate, calcium carbonate, silicon carbonate, silicon nitride, potassium titanate, basic magnesium sulfate, zinc oxide, graphite, calcium sulfate, magnesium borate, magnesium oxide, and silicate mineral.

Silicate mineral is preferred as the inorganic filler.

Specific examples of the silicate mineral include THIXOTROPIC AGENT DT 5039 (from Huntsman Japan KK).

Examples of the internal mold release agent include metal soap, polyethylene wax, vegetable wax such as carnauba wax, fatty acid ester-based mold release agent, silicone oil, animal wax, and fluorine-containing nonionic surfactant.

The content of the internal mold release agent, when contained in the epoxy resin composition of the present disclosure, is not particularly limited, and is preferably 0.1 parts by mass to 5 parts by mass for example, and more preferably 0.2 parts by mass to 2 parts by mass, per 100 parts by mass of the epoxy resin [A].

With the content of the internal mold release agent in the epoxy resin composition of the present disclosure adjusted within the aforementioned ranges per 100 parts by mass of the epoxy resin [A], a good effect of mold releasability from metal mold is exhibited.

Examples of commercially available products of the internal mold release agent include MOLD WIZ (registered trademark) INT1846 (from Axel Plastics Research Laboratories, Inc.), Licowax S, Licowax P, Licowax OP, Licowax PE190, and Licowax PED (all from Clariant Japan K.K.), and RIKEMAL (registered trademark) SL-900A (from Riken Vitamin Co., Ltd.).

[Stress Relaxation Rate]

The epoxy resin composition of the present disclosure preferably demonstrates a stress relaxation rate of 95% or larger at one hour from the start of application of an external force, when measured after being cured up to a degree of cure of 90% or higher to give a cured product, and by applying the external force to the cured product at a temperature 40°C higher than the glass transition temperature of the cured product, wherein the rate is more preferably 97% or larger, and still more preferably 99% or larger.

With the stress relaxation rate adjusted to 95% or larger, the remoldability of the epoxy resin cured product and the fiber-reinforced composite material described later tends to be impaired, and the strength and the elastic modulus tend not to decrease.

The stress relaxation rate relates to temporal change in the modulus G that occurs in the stress relaxation measurement over 3600 seconds (1 hour), and is determined by the following equation. The modulus is a value of stress produced under strain caused by application of external force.

$$[1 - ((G(\min))/(G(0)))] \times 100$$

G(0) represents a modulus at the start of application of the external force (that is, 0 seconds after the start of application of the external force).

G(min) is a minimum modulus at the time point of 3600 seconds from the start of application of the external force, in other words, a minimum modulus) over a period up to 3600 seconds after the start of application of the external force. If the lower limit value measurable by an instrument has been reached within 3600 after the start of application of the external force, the modulus is defined as such lower limit value, meanwhile if the lower limit value measurable by the instrument has not been reached within 3600 seconds after the start of application of the external force, the modulus is defined as a value measured 3600 seconds after the start of application of the external force.

The stress relaxation rate at the time point of one hour from the start of application of the external force being 95% or larger means that the stress, which marked 100% at the start of application of the external force, was relaxed with time under applied external force, decreased down below 5% at one hour from the start of application of the external force, where the cured product became fluidic. The cured product may become remoldable and self-healable, as a result of acquisition of fluidity.

[Stress Relaxation Mode Separation Analysis]

The stress relaxation mode separation analysis is described in detail.

Behavior of stress relaxation under stress applied to the cured product of the epoxy resin composition of the present disclosure is approximated by a generalized Maxwell model. The generalized Maxwell model has, arranged in parallel, a plural kinds of two-element model which is so-called Maxwell element, each having a dashpot and a spring arranged in series. One Maxwell element that constitutes the generalized Maxwell model corresponds to one relaxation mode. That is, behavior of stress relaxation of the generalized Maxwell model under applied stress can be described as a linear sum of behaviors of the individual Maxwell elements (the individual relaxation modes) as the constituents. Performance of the bond exchange inside the cured product of the epoxy resin composition of the present disclosure can be quantitatively evaluated, by separating the measured results of stress relaxation according to the linear sum equation of the generalized Maxwell model, and by evaluating the relaxation time ascribed to each relaxation mode.

The modulus G(t) over 3600 seconds generated in the measurement of stress relaxation is approximated by the following equation, until a coefficient of determination R2 > 0.999 is achieved:

$$G(t) = G_0 \sum \mu_i \exp\left(-\frac{t}{\tau_i}\right)$$

In the equation above, t represents time (in second), and $G_0$ represents modulus G(0) at t = 0 seconds. $\mu_i$ represents an independent variable in a range that satisfies $\Sigma\mu_i = 1$, indicating the degree of contribution (in %) of each term (so-called each relaxation mode) in this multivariable linear equation.

$\tau_i$ represents a relaxation time (second) in each relaxation mode, which is freely set so as to include a relaxation mode having a relaxation time sufficiently longer than the measurement time. Furthermore, the individual relaxation modes are set so as to make their relaxation times uniform among the same logarithmic ranges, and equal within the same logarithmic range. Besides this, the number and range of other relaxation modes to be set are not particularly limited, wherein they are preferably as large as possible for example, in consideration of calculation load.

For example, the separation analysis of stress relaxation mode of the epoxy resin cured product of the present disclosure, within the range from 0 seconds to 3600 seconds, is preferably conducted in 25 types of relaxation mode (that is, τi values) below:

τi = 1, 2.5, 4, 5.5, 7, 8.5, 10, 25, 40, 55, 70, 85, 100, 250, 400, 550, 700, 850, 1000, 2500, 4000, 5500, 7000, 8500, 10000.

The maximum value $\tau_i$ of the values $\tau_i$ = 10000 (seconds) in this case is set, so as to include a measurement time of 3600 seconds. Furthermore, the individual relaxation modes are set so as to make their relaxation times uniform among the same logarithmic ranges, and equal within the same logarithmic range, like 1, 4, 7, 10, 40 ... and so on. The cured product of the epoxy resin composition of the present disclosure is now approximated by a linear sum of relaxation modes having 25 types of relaxation time, whereby the behavior of stress relaxation is measured.

From a graph of each measured relaxation mode, with the logarithmic relaxation time plotted on the abscissa, and the logarithmic stress plotted on the ordinate, an approximate expression is obtained with use of the aforementioned equation. Then regarding $\tau_i$ and $\mu_i$ in the obtained approximate expression, logarithmic $\tau_i$ is plotted on the abscissa and $\mu_i$ is plotted on the ordinate, wherein $\tau_i$ values corresponding to peaks in the resulting distributions are the relaxation times for a group of the separated relaxation modes.

Furthermore, a $\mu_i$ value at $\tau_i$ constituting an arbitrary peak, with respect to the sum of $\mu_i$ values in a group of $\tau_i$ constituting the individual peaks, is the degree of contribution (%) of each separated relaxation mode.

Measurement of stress relaxation can employ any of the known devices and techniques.

For the measurement of stress relaxation, it suffices that temporal change in stress after instantaneous application of external force may be tracked and recorded, under isothermal conditions with use of a thermostatic device.

Specific examples of the measurement of stress relaxation include measurement carried out in a shear mode with use of a rheometer equipped with parallel plates, and measurement carried out in a bending mode or tensile mode by dynamic mechanical analysis (DMA). The measurement is preferably conducted in an inert gas atmosphere, and in an atmosphere with controlled humidity. Although not particularly limited, stress relaxation is preferably measured, for example, in a room with a low-humidity atmosphere having a relative humidity of 50%RH or lower, while allowing nitrogen gas to flow in the measurement device at a flow rate of 10 L/min or larger.

With respect to the stress relaxation behavior observed when the epoxy resin composition of the present disclosure is cured to a degree of cure of 90% or higher to obtain a cured product and an external force is applied to the cured product at a temperature 40°C higher than the glass transition temperature of the cured product, the result of stress relaxation mode separation analysis preferably shows, in a graph in which the logarithm of $\tau i$ is plotted on the abscissa and $\mu i$ is plotted on the ordinate, two or more types of relaxation mode groups having distributions.
The graph preferably shows that at least a relaxation mode group having a relaxation time exceeding 1000 seconds has a degree of contribution of 40% or less; more preferably that a relaxation mode group having a relaxation time exceeding 1000 seconds has a degree of contribution of 25% or less; and still more preferably that a relaxation mode group having a relaxation time exceeding 1000 seconds has a degree of contribution of 25% or less, a relaxation mode group having a relaxation time of 200 seconds to 1000 seconds has a degree of contribution of 50% or less, and a relaxation mode group having a relaxation time of less than 200 seconds has a degree of contribution of 50% or more.
An epoxy resin composition that provides, when cured into the above-described cured product, a graph having two or more relaxation mode groups tends to be less likely to impair the creep properties of the epoxy resin cured product or the fiber-reinforced composite material under high-temperature conditions.
Furthermore, when the graph obtained in the cured state has two or more relaxation mode groups and the contribution ratio of the relaxation mode group having a relaxation time exceeding 1000 seconds is 40% or less, the epoxy resin cured product or the fiber-reinforced composite material tends to be less likely to impair remoldability and self-healability.

< Method for Producing Epoxy Resin Composition >

The method for preparing the epoxy resin composition of the present disclosure is not particularly limited.
The epoxy resin composition of the present disclosure may be produced by any conventionally known method.
For example, the epoxy resin composition of the present disclosure may be produced by mixing the epoxy resin [A], the curing agent [B], optionally a curing accelerator, and other components. The order of mixing these components is not particularly limited.
The mixing temperature is not particularly limited, and may be from 40°C to 120°C.
When the mixing temperature is 40°C or higher, the viscosity of the epoxy resin composition does not become excessively high, and the components tend to be mixed well. When the mixing temperature is 120°C or lower, deterioration in impregnability into a fiber-reinforced substrate layer due to partial progress of a curing reaction tends to be suppressed, and deterioration in shelf stability of the resulting epoxy resin composition and a prepreg produced therefrom also tends to be suppressed.
The mixing temperature is preferably from 50°C to 100°C, and more preferably from 50°C to 90°C.
The mixing means is not particularly limited.
Examples of the mixing means include conventionally known mixing devices.
Examples of the mixing device include a roll mill, a planetary mixer, a kneader, an extruder, a Banbury mixer, a mixing vessel equipped with a stirring blade, and a horizontal mixing tank.
The individual components may be mixed in air or in an inert gas atmosphere.
When mixing is carried out in air, the atmosphere is preferably controlled in terms of temperature and humidity.
Although not particularly limited, the mixing of the individual components is preferably carried out, for example, in a low-humidity atmosphere in which the temperature is controlled at 30°C or lower and the relative humidity is 50% RH or less.

<< Epoxy Resin Cured Product >>

The epoxy resin cured product of the present disclosure includes an epoxy resin cured product of a first embodiment and an epoxy resin cured product of a second embodiment.

< Epoxy Resin Cured Product of First Embodiment >

The epoxy resin cured product of the first embodiment is resulting from curing of the epoxy resin composition of the present disclosure.
The method for curing the epoxy resin composition of the present disclosure to obtain the epoxy resin cured product of the first embodiment is not particularly limited, and the curing may be carried out by any known method. For example, the epoxy resin cured product of the first embodiment may be obtained by defoaming the epoxy resin composition of the present disclosure in vacuo, followed by curing at a temperature of from 120°C to 200°C for from 15 minutes to 24 hours, preferably at a temperature of from 120°C to 180°C for from 1 hour to 12 hours, and more preferably at a temperature of from 150°C to 180°C for from 1 hour to 6 hours.

More specifically, the epoxy resin cured product of the first embodiment may be obtained by defoaming the epoxy resin composition of the present disclosure in vacuo, followed by curing at 120°C for 2 hours, then at 150°C for 2 hours, and then at 180°C for 2 hours.

The epoxy resin cured product of the first embodiment preferably exhibits dissolution of 80% by mass or more when contacted with a decomposition agent containing a reducing agent and heated at 100°C for 48 hours, more preferably dissolution of 90% by mass or more, still more preferably dissolution of 95% by mass or more, and particularly preferably dissolution of 100% by mass, that is, complete dissolution of the epoxy resin cured product.

In the present disclosure, the dissolution rate (unit: % by mass) of the epoxy resin cured product is measured by dividing a mass of a residue obtained by filtering a solution in which the epoxy resin cured product has been dissolved by a mass of the epoxy resin cured product before dissolution.

The reducing agent is not particularly limited as long as it is capable of dissolving the epoxy resin cured product, and may be appropriately selected according to the type of bonds contained in the epoxy resin cured product.

Examples of the reducing agent include dithiothreitol, 2-mercaptoethanol, 1-thioglycerol, glutathione, 2-mercaptoethylamine hydrochloride, cystine hydrochloride, and tris(2-carboxyethyl)phosphine hydrochloride.

The reducing agent is preferably one that reduces disulfide bonds.

The reducing agent may be used alone or in combination of two or more.

The reducing agent may be used without a solvent, or may be used as a decomposition agent solution after dilution with a solvent. The epoxy resin cured product of the second embodiment may be dissolved by immersing it in a decomposition agent solution containing the reducing agent.

The amount of the decomposition agent solution used is not particularly limited, and may be determined according to the shape of the epoxy resin cured product, dissolution conditions, and the like.

For example, the amount of the decomposition agent contained in the decomposition agent solution is preferably from 0.5 times to 1000 times, more preferably from 0.5 times to 100 times, and still more preferably from 0.5 times to 10 times, relative to the amount of the epoxy resin cured product on a mass basis.

The concentration of the reducing agent in the decomposition agent solution is not particularly limited, but is preferably from 0.1% by mass to 99.9% by mass, more preferably from 1% by mass to 80% by mass, and still more preferably from 5% by mass to 50% by mass.

The solvent used for dilution is not particularly limited as long as the reducing agent can be dissolved therein and the epoxy resin cured product can be dissolved thereby. The solvent may be water or an organic solvent.

Examples of the organic solvent used for dilution include N,N-dimethylformamide, N,N-dimethylacetamide, N-methyl-2-pyrrolidone, dimethyl sulfoxide, 1,4-dioxane, tetrahydrofuran, methanol, and ethanol.

Polar organic solvents such as N,N-dimethylformamide, N,N-dimethylacetamide, N-methyl-2-pyrrolidone, and dimethyl sulfoxide are particularly preferred because the epoxy resin cured product can be completely dissolved therein.

The decomposition agent may contain, in addition to the reducing agent, an additive that promotes dissolution of the epoxy resin cured product. In particular, nitrogen-containing bases such as triethylamine, DBU (1,8-diazabicycloundecene), and ammonia are preferred because they have a high effect in promoting dissolution of the epoxy resin cured product.

The epoxy resin cured product of the first embodiment preferably produces at least one compound containing a structure represented by formula (7) when contacted with a decomposition agent containing a reducing agent and heated at 100°C for 48 hours.

More preferably, the epoxy resin cured product of the first embodiment is decomposed into at least one compound containing the structure represented by formula (7) when contacted with a decomposition agent containing a reducing agent and heated at 100°C for 48 hours.

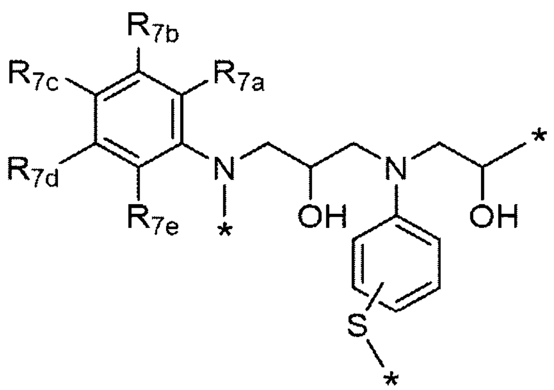

(7)

In formula (7), each of $R_{7a}$, $R_{7b}$, $R_{7c}$, $R_{7d}$, and $R_{7e}$ independently represents a hydrogen atom, an aliphatic

hydrocarbon group having 1 to 20 carbon atoms, an alicyclic hydrocarbon group, an aromatic hydrocarbon group, an alkoxy group, an amino group, or a halogen atom, and * represents a bond.

The aliphatic hydrocarbon group may have substituent on the alkyl chain, or may be unsubstituted.

The number of carbon atoms in the aliphatic hydrocarbon group, exclusive of the number of carbon atoms in the substituent, is 1 to 20, preferably 1 to 10, and more preferably 1 to 5.

Specific examples of the aliphatic hydrocarbon group include saturated aliphatic hydrocarbon groups such as methyl group, ethyl group, n-propyl group, isopropyl group, n-butyl group, s-butyl group, t-butyl group, pentyl group, hexyl group, octyl group, decyl group, dodecyl group, tetradecyl group, hexadecyl group, and octadecyl group; and unsaturated aliphatic hydrocarbon groups such as allyl group and vinyl group.

The alicyclic hydrocarbon group may have substituent on the ring, or may be unsubstituted.

The number of carbon atoms in the alicyclic hydrocarbon group, exclusive of the number of carbon atoms in the substituent, is preferably 4 to 18, and more preferably 5 to 10.

Specific examples of the alicyclic hydrocarbon group include cyclopentyl group, cyclohexyl group, cycloheptyl group, cyclopentenyl group, and cyclohexenyl group.

The aromatic hydrocarbon group may have substituent on the aromatic ring, or may be unsubstituted.

The number of carbon atoms in the aromatic hydrocarbon group, exclusive of the number of carbon atoms in the substituent, is preferably 6 to 18, and more preferably 6 to 15.

Specific examples of the aromatic hydrocarbon group include aryl groups such as phenyl group and naphthyl group.

The alkoxy group may have substituent on the alkyl chain, or may be unsubstituted. The alkoxy group may be straight, branched, or cyclic.

The number of carbon atoms in the alkoxy group, exclusive of the number of carbon atoms in the substituent, is preferably 1 to 6, and more preferably 1 to 3.

Specific examples of the alkoxy group include methoxy group, ethoxy group, n-propyloxy group, isopropyloxy group, n-butyloxy group, isobutyloxy group, t-butyloxy group, n-pentyloxy group, n-hexyloxy group, and phenoxy group.

The alkoxy group is preferably methoxy group or phenoxy group.

The amino group may have substituent on the nitrogen atom, or may be unsubstituted.

Examples of the substituent, if present in the amino group, include alkyl group and aryl group.

The number of carbon atoms in the substituted amino group is preferably 1 to 20, and more preferably 1 to 12.

Specific examples of the amino group include dimethylamino group, diethylamino group, and diphenylamino group.

Specific examples of the halogen atom include fluorine atom, chlorine atom, bromine atom, and iodine atom.

The halogen atom is preferably fluorine atom or chlorine atom.

In formula (7), each of $R_{7a}$, $R_{7b}$, $R_{7c}$, $R_{7d}$, and $R_{7e}$ independently represents a hydrogen atom, an aliphatic hydrocarbon group having 1 to 5 carbon atoms, an aromatic hydrocarbon group, an alkoxy group, or a halogen atom; more preferably represents a hydrogen atom, a methyl group, or a methoxy group; and still more preferably represents a hydrogen atom or a methyl group.

A preferred aspect of the compound that contains the structure represented by formula (7) has a hydrogen atom or a methyl group for $R_{7a}$, and has a hydrogen atom for each of $R_{7b}$, $R_{7c}$, $R_{7d}$ and $R_{7e}$.

In formula (7), * in "-N-*" preferably represents a bond with a structure derived from the epoxy resin, * in "-C(OH)-*" preferably represents a bond with a structure derived from the epoxy resin, and * in "-S-*" preferably represents a bond with a structure derived from the reducing agent.

Although not particularly limited, the molecular weight of the compound that contains the structure represented by formula (7) is preferably 200 to 5000, for example from the viewpoint of solubility, which is more preferably 200 to 2000, and still more preferably 200 to 1000. In the present disclosure, the molecular weight of the compound that contains the structure represented by formula (7) is measured by gel permeation chromatography (GPC), with use of chloroform, N,N-dimethylformamide or the like as an eluent.

Production of the compound that contains the structure represented by formula (7) may be confirmed by FT-IR. The production may alternatively be confirmed by $^{1}$H-NMR.

< Epoxy Resin Cured Product of Second Embodiment >

The epoxy resin cured product of the second embodiment produces at least one compound containing a structure represented by formula (7) when contacted with a decomposition agent containing a reducing agent and heated at 100°C for 48 hours.

The epoxy resin cured product of the second embodiment is preferably decomposed into at least one compound containing the structure represented by formula (7) when contacted with a decomposition agent containing a reducing agent and heated at 100°C for 48 hours.

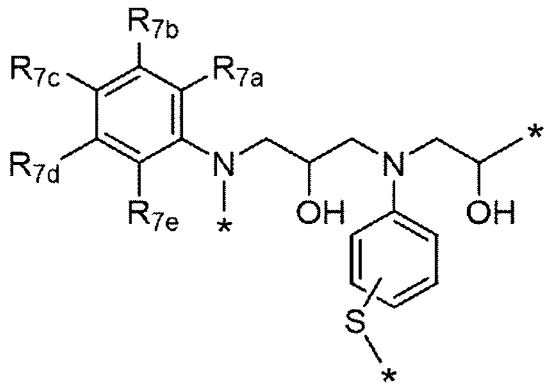

(7)

In formula (7), each of $R_{7a}$, $R_{7b}$, $R_{7c}$, $R_{7d}$, and $R_{7e}$ independently represents a hydrogen atom, an aliphatic hydrocarbon group having 1 to 20 carbon atoms, an alicyclic hydrocarbon group, an aromatic hydrocarbon group, an alkoxy group, an amino group, or a halogen atom, and * represents a bond.

The description of formula (7) and preferred aspects are the same as the description of formula (7) and the preferred aspects having been described in < Epoxy Resin Cured Product of First Embodiment >.

Although not particularly limited, the molecular weight of the compound that contains the structure represented by formula (7) is preferably 200 to 5000, for example from the viewpoint of solubility, which is more preferably 200 to 2000, and still more preferably 200 to 1000. In the present disclosure, the molecular weight of the compound that contains the structure represented by formula (7) is measured by gel permeation chromatography (GPC), with use of chloroform or N,N-dimethylformamide as an eluent.

The description on the decomposition agent that contains the reducing agent in the epoxy resin cured product of the second embodiment, inclusive of the definitions, examples, preferred embodiments, and the like, is the same as the description on the decomposition agent that contains the reducing agent in < Epoxy Resin Cured Product of First Embodiment >.

For example, when the epoxy resin cured product of the second embodiment is heated using an N,N-dimethylformamide solution of 2-mercaptoethanol as a decomposition agent solution, at least one compound containing a structure represented by the following formula (7-1) is produced:

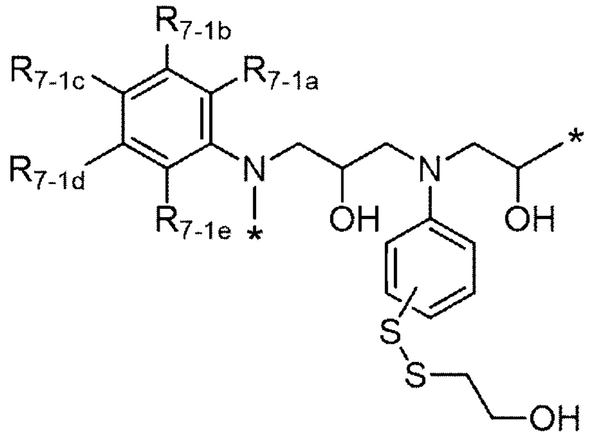

(7-1)

In formula (7-1), each of $R_{7-1a}$, $R_{7-1b}$, $R_{7-1c}$, $R_{7-1d}$, and $R_{7-1e}$ independently represents a hydrogen atom, an aliphatic hydrocarbon group having 1 to 20 carbon atoms, an alicyclic hydrocarbon group, an aromatic hydrocarbon group, an alkoxy group, an amino group, or a halogen atom, and * represents a bond.

The aliphatic hydrocarbon group may have substituent on the alkyl chain, or may be unsubstituted.

The number of carbon atoms in the aliphatic hydrocarbon group, exclusive of the number of carbon atoms in the substituent, is 1 to 20, preferably 1 to 10, and more preferably 1 to 5.

Specific examples of the aliphatic hydrocarbon group include saturated aliphatic hydrocarbon groups such as methyl group, ethyl group, n-propyl group, isopropyl group, n-butyl group, s-butyl group, t-butyl group, pentyl group, hexyl group, octyl group, decyl group, dodecyl group, tetradecyl group, hexadecyl group, and octadecyl group; and unsaturated aliphatic hydrocarbon groups such as allyl group and vinyl group.

The alicyclic hydrocarbon group may have substituent on the ring, or may be unsubstituted.

The number of carbon atoms in the alicyclic hydrocarbon group, exclusive of the number of carbon atoms in the

substituent, is preferably 4 to 18, and more preferably 5 to 10.

Specific examples of the alicyclic hydrocarbon group include cyclopentyl group, cyclohexyl group, cycloheptyl group, cyclopentenyl group, and cyclohexenyl group.

The aromatic hydrocarbon group may have substituent on the aromatic ring, or may be unsubstituted.

The number of carbon atoms in the aromatic hydrocarbon group, exclusive of the number of carbon atoms in the substituent, is preferably 6 to 18, and more preferably 6 to 15.

Specific examples of the aromatic hydrocarbon group include aryl groups such as phenyl group and naphthyl group.

The alkoxy group may have substituent on the alkyl chain, or may be unsubstituted.

The alkoxy group may be straight, branched, or cyclic.

The number of carbon atoms in the alkoxy group, exclusive of the number of carbon atoms in the substituent, is preferably 1 to 6, and more preferably 1 to 3.

Specific examples of the alkoxy group include methoxy group, ethoxy group, n-propyloxy group, isopropyloxy group, n-butyloxy group, isobutyloxy group, t-butyloxy group, n-pentyloxy group, n-hexyloxy group, and phenoxy group.

The alkoxy group is preferably methoxy group or phenoxy group.

The amino group may have substituent on the nitrogen atom, or may be unsubstituted.

Examples of the substituent, if present in the amino group, include alkyl group and aryl group.

The number of carbon atoms in the substituted amino group is preferably 1 to 20, and more preferably 1 to 12.

Specific examples of the amino group include dimethylamino group, diethylamino group, and diphenylamino group.

Specific examples of the halogen atom include fluorine atom, chlorine atom, bromine atom, and iodine atom.

The halogen atom is preferably fluorine atom or chlorine atom.

In formula (7), each of $R_{7-1a}$, $R_{7-1b}$, $R_{7-1c}$, $R_{7-1d}$, and $R_{7-1e}$ independently represents a hydrogen atom, an aliphatic hydrocarbon group having 1 to 5 carbon atoms, an aromatic hydrocarbon group, an alkoxy group, or a halogen atom; more preferably represents a hydrogen atom, a methyl group, or a methoxy group; and still more preferably represents a hydrogen atom or a methyl group.

In a preferred aspect of the compound having a structure represented by formula (7-1), $R_{7-1a}$ represents a hydrogen atom or a methyl group, and each of $R_{7-1b}$, $R_{7-1c}$, $R_{7-1d}$ and $R_{7-1e}$ represents a hydrogen atom.

In formula (7-1), * in "-N-*" preferably represents a bond with a structure derived from the epoxy resin, and * in "-C(OH)-*" preferably represents a bond with a structure derived from the epoxy resin.

Although not particularly limited, the molecular weight of the compound that contains the structure represented by formula (7-1) is preferably 200 to 5000, for example from the viewpoint of solubility, which is more preferably 200 to 2000, and still more preferably 200 to 1000.

The conditions for heating in contact with a decomposition agent containing a reducing agent are not particularly limited. For example, heating may be carried out at a temperature of from 25°C to 150°C (preferably from 25°C to 60°C) for from 1 hour to 48 hours (preferably from 1 hour to 8 hours). Stirring may be performed as appropriate, and ultrasonication may be applied as necessary.

For example, the reaction for producing a compound containing the structure represented by formula (7-1) may be carried out by stirring the epoxy resin cured product and the decomposition agent at room temperature (25°C) or at 80°C for 8 hours.

When heating the epoxy resin cured product in contact with a decomposition agent containing a reducing agent, pressurization at from 0.1 MPa to 10 MPa (preferably from 0.1 MPa to 1 MPa) may be applied in order to promote production of a compound containing the structure represented by formula (7-1).

Production of the compound that contains the structure represented by formula (7-1) may be confirmed by FT-IR. The production may alternatively be confirmed by $^{1}$H-NMR.

<< Physical Properties of Epoxy Resin Cured Product >>

A glass transition temperature (Tg) of the epoxy resin cured product of the present disclosure is not particularly limited, but is preferably from 80°C to 300°C, and more preferably from 100°C to 200°C.

When the glass transition temperature (Tg) is 80°C or higher, the heat resistance of the epoxy resin cured product tends to be improved, and thus the obtainable fiber-reinforced composite material tends to be less likely to form voids or the like.

When the glass transition temperature (Tg) is 300°C or lower, the temperature conditions in the remolding and self-healing processes are moderated, and thus the mechanical properties tend to be less likely to deteriorate due to thermal degradation of the resin.

In the present disclosure, the glass transition temperature of the epoxy resin cured product is measured using a differential scanning calorimeter. More specifically, the epoxy resin cured product is heated from 30°C to 350°C at a rate of

10°C/min, and an inflection point observed on the obtained transition curve is defined as the glass transition temperature of the epoxy resin cured product.

Although not particularly limited, a flexural modulus (FM) of the epoxy resin cured product of the present disclosure is preferably 2.00 GPa or more, more preferably from 2.30 GPa to 30.00 GPa, still more preferably from 2.50 GPa to 20.00 GPa, and may also be from 2.50 GPa to 5.00 GPa.

When the flexural modulus (FM) is 2.00 GPa or more, the obtainable fiber-reinforced composite material tends to be less likely to suffer deterioration in properties.

In the present disclosure, the flexural modulus of the epoxy resin cured product is measured in accordance with JIS K 7171:2016 (ISO 178:2010).

Although not particularly limited, a flexural strength (FS) of the epoxy resin cured product of the present disclosure is preferably 60 MPa or more, more preferably from 80 MPa to 150 MPa, and still more preferably from 100 MPa to 150 MPa.

When the flexural strength (FS) is 60 MPa or more, the obtainable fiber-reinforced composite material tends to be less likely to suffer deterioration in properties.

In the present disclosure, the flexural strength of the epoxy resin cured product is measured in accordance with JIS K 7171:2016 (ISO 178:2010).

Although not particularly limited, the degree of cure of the epoxy resin cured product of the present disclosure is preferably 90% or larger, more preferably 95% or larger, and still more preferably 99% or larger. An insufficient degree of cure is likely to cause poor toughness.

**In** the present disclosure, the degree of cure of the epoxy resin cured product is measured by a method in accordance with JIS K 7148-1:2015 (ISO 14322:2012).

The epoxy resin cured product of the present disclosure, even with the void such as crack or separation contained therein, can cure the void, as a result of process that includes heating.

<< Prepreg >>

The prepreg of the present disclosure is a prepreg obtained by impregnating a fiber-reinforced substrate having reinforcing fibers with the epoxy resin composition of the present disclosure, wherein a content of the reinforcing fibers is from 25% by volume to 75% by volume based on a total volume of the prepreg.

The prepreg of the present disclosure is a prepreg in which the epoxy resin composition of the present disclosure is impregnated into a part or the entirety of a fiber-reinforced substrate.

When the content of the reinforcing fibers in the prepreg of the present disclosure is 25% by volume or more, a sufficient reinforcing effect by the reinforcing fibers is obtained, and the mechanical properties per unit mass tend to be improved.

When the content of the reinforcing fibers in the prepreg of the present disclosure is 75% by volume or less, voids and the like are less likely to be generated in the resulting fiber-reinforced composite material, and deterioration in mechanical properties tends to be suppressed.

The content of the reinforcing fibers in the prepreg of the present disclosure is preferably from 45% by volume to 70% by volume, and more preferably from 50% by volume to 65% by volume, based on the total volume of the prepreg.

The prepreg of the present disclosure may have various forms. For example, it may be a tow prepreg in which the reinforcing fibers are formed in a strand form, a sheet molding compound (SMC) in which the reinforcing fibers are short fibers having a fiber length of from 5 mm to 100 mm, or a woven prepreg in which the reinforcing fibers are formed as a woven fabric or a multi-layered woven fabric.

The tow prepreg is a narrow intermediate material obtained by impregnating a reinforcing fiber bundle, in which thousands to tens of thousands of reinforcing fiber filaments are arranged in one direction, with a matrix resin composition, and then winding the impregnated bundle onto a bobbin such as a paper tube. In the present disclosure, an article wound onto a bobbin in this manner, or an article that has been wound and subsequently unwound, is referred to as a "tow prepreg".

< Fiber-reinforced substrate >

Type of the fiber-reinforced substrate is not particularly limited.

Examples of the fiber-reinforced substrate include carbon fiber, glass fiber, aramid fiber, silicon carbide fiber, polyester fiber, ceramic fiber, alumina fiber, boron fiber, metal fiber, mineral fiber, rock fiber, and slag fiber.

Among them, carbon fiber, glass fiber, or aramid fiber is preferred as the fiber-reinforced substrate, and carbon fiber is more preferred from the viewpoint of obtaining a fiber-reinforced composite material that excels in specific strength and specific elastic modulus, and having lightweightness and high strength. Among the carbon fibers, polyacrylonitrile (PAN)-based carbon fiber is particularly preferred as the fiber-reinforced substrate, for its excellent tensile strength.

The PAN-based carbon fiber, when used as the fiber-reinforced substrate, preferably has a tensile elastic modulus of 100 GPa to 600 GPa, which is more preferably 200 GPa to 500 GPa, and still more preferably 230 GPa to 450 GPa. The tensile strength is preferably 2000 MPa to 10,000 MPa, and more preferably 3000 MPa to 8000 MPa.
The carbon fiber, when used as the fiber-reinforced substrate, preferably has a diameter of 4 μm to 20 μm, which is more preferably 5 μm to 10 μm. Use of this sort of carbon fiber can improve the mechanical property of the obtainable fiber-reinforced composite material.
The fiber-reinforced substrate is preferably used in a sheet form.
Examples of the reinforcing fiber sheet include a sheet in which a large number of reinforcing fibers are aligned in one direction, a bidirectional woven fabric such as a plain weave or a twill weave, a multiaxial woven fabric, a nonwoven fabric, a mat, a knit, a braid, and paper obtained by a papermaking process using reinforcing fibers.
Among these, a unidirectionally aligned sheet, a bidirectional woven fabric, or a multiaxial woven fabric substrate formed as a sheet of continuous fibers is preferred because a fiber-reinforced composite material having superior mechanical properties can be obtained.
The thickness of the sheet-shaped fiber-reinforced substrate is preferably from 0.01 mm to 3 mm, and more preferably from 0.1 mm to 1.5 mm.

< Method for Manufacturing Prepreg >

The method for producing the prepreg of the present disclosure is not particularly limited.
The prepreg of the present disclosure may be produced by any conventionally known method.
A hot-melt method or a solvent method may be suitably employed as the method for producing the prepreg of the present disclosure.
The hot-melt method is a method in which the epoxy resin composition is applied in a thin film form onto a release paper to form an epoxy resin composition film, the epoxy resin composition film is laminated onto a fiber-reinforced substrate, and the laminate is heated under pressure to impregnate the epoxy resin composition into the fiber-reinforced substrate layer.
The method for forming the epoxy resin composition into the epoxy resin composition film is not particularly limited, to which any of the known methods is applicable.
More specifically, a resin composition film is obtainable by spreading or casting the epoxy resin composition on a support such as release paper or film, with use of die extrusion, an applicator, a reverse roll coater, a comma coater, or the like.
The resin temperature during manufacture of the film is appropriately determined, depending on the chemical composition or viscosity of the epoxy resin composition. More specifically, the temperature condition same as that in the aforementioned method for manufacturing the epoxy resin composition is suitably used. The impregnation of the epoxy resin composition into the fiber-reinforced substrate layer may take place in a single batch, or may be divided in multiple batches.
The solvent method is conducted by preparing a varnish of the epoxy resin composition with use of an appropriate solvent, and by impregnating the varnish into the fiber-reinforced substrate layer.
Among the known methods, the hot melt method, which is solvent-free, is preferred as the method for manufacturing the prepreg of the present disclosure.
When the epoxy resin composition film is impregnated into the fiber-reinforced substrate layer by a hot melt method, an impregnation temperature is preferably from 50°C to 120°C.
When the impregnation temperature is 50°C or higher, the viscosity of the epoxy resin composition tends not to become excessively high, and the epoxy resin composition tends to be sufficiently impregnated into the fiber-reinforced substrate layer.
When the impregnation temperature is 120°C or lower, the curing reaction of the epoxy resin composition tends to be suppressed, and thus degradation of shelf stability and drapability of the obtainable prepreg tends to be inhibited.
The impregnation temperature is more preferably 60°C to 110°C, and still more preferably 70°C to 100°C.
Impregnation pressure, during the impregnation of the epoxy resin composition film into the fiber-reinforced substrate layer by the hot melt method, is appropriately determined in consideration of the viscosity of the epoxy resin composition, resin flow, and the like.
The impregnation pressure is preferably 0.01 N/cm to 250 N/cm, and more preferably 0.1 N/cm to 200 N/cm.

<< Fiber-Reinforced Composite Material >>

The fiber-reinforced composite material of the present disclosure comprises an epoxy resin cured product obtained by curing the epoxy resin composition of the present disclosure (that is, the epoxy resin cured product of the present disclosure) and a fiber-reinforced substrate having reinforcing fibers, wherein a content of the reinforcing fibers is

from 25% by volume to 75% by volume based on a total volume of the fiber-reinforced composite material.

The fiber-reinforced composite material of the present disclosure preferably consists of the epoxy resin cured product obtained by curing the epoxy resin composition of the present disclosure (that is, the epoxy resin cured product of the present disclosure) and the fiber-reinforced substrate having reinforcing fibers.

The content of the reinforcing fibers in the fiber-reinforced composite material of the present disclosure is preferably from 45% by volume to 70% by volume, and more preferably from 50% by volume to 65% by volume, based on the total volume of the fiber-reinforced composite material.

The epoxy resin composition of the present disclosure has high impregnability with respect to a fiber-reinforced substrate and good handleability, and can be used to produce a fiber-reinforced composite material having excellent properties.

The fiber-reinforced composite material of the present disclosure, even if it has voids such as cracks or delamination therein, can have such voids repaired by a process including heating.

< Method for Manufacturing Fiber-Reinforced Composite Material >

The fiber-reinforced composite material of the present disclosure may be obtained by combining a fiber-reinforced substrate having reinforcing fibers with the epoxy resin composition of the present disclosure and curing the resulting composite.

Alternatively, the fiber-reinforced composite material of the present disclosure may be obtained by heating and pressurizing the above-described prepreg of the present disclosure under specific conditions to cure the prepreg.

Examples of methods for producing the fiber-reinforced composite material using the prepreg of the present disclosure include known molding methods such as autoclave molding and press molding.

[Autoclave Molding]

Autoclave molding is preferably used as a method for producing the fiber-reinforced composite material of the present disclosure.

Autoclave molding is a method in which a prepreg and a bagging film are sequentially placed on a lower die of a mold, the prepreg is sealed airtight between the lower die and the bagging film, a space formed by the lower die and the bagging film is evacuated to a vacuum, and heating and pressurization are carried out in an autoclave molding apparatus.

The molding conditions preferably include a temperature rise rate of from 1°C/min to 50°C/min, and heating and pressurization at a pressure of from 0.2 MPa to 0.7 MPa and at a temperature of from 130°C to 180°C for from 1 hour to 12 hours.

[Press Molding]

Press molding is preferably used as a method for producing the fiber-reinforced composite material of the present disclosure.

Press molding is a method in which the prepreg of the present disclosure, or a preform formed by laminating the prepreg of the present disclosure, is heated and pressurized using a mold. The mold is preferably preheated to a curing temperature in advance.

The temperature of the mold during press molding is preferably from 150°C to 210°C.

When the molding temperature is 150°C or higher, the curing reaction proceeds sufficiently, and the fiber-reinforced composite material tends to be obtained with high productivity.

When the molding temperature is 210°C or lower, excessive reduction in viscosity of the epoxy resin composition is suppressed, and excessive flow of the epoxy resin composition within the mold can be prevented. As a result, outflow of the epoxy resin composition from the mold and waviness of the reinforcing fibers are suppressed, and a high-quality fiber-reinforced composite material tends to be obtained.

The pressure during molding is preferably from 0.05 MPa to 2 MPa, and more preferably from 0.2 MPa to 2 MPa.

When the pressure is 0.05 MPa or higher, appropriate flow of the epoxy resin composition is obtained, and defects in appearance and generation of voids tend to be suppressed. In addition, the prepreg adheres sufficiently to the mold, and a fiber-reinforced composite material having a good appearance tends to be obtained.

When the pressure is 2 MPa or lower, excessive flow of the epoxy resin composition is suppressed, and defects in appearance of the resulting fiber-reinforced composite material are less likely to occur. In addition, excessive load on the mold is avoided, and deformation of the mold is less likely to occur.

The molding time is preferably from 1 hour to 8 hours.

< Examples of Fiber-Reinforced Composite Material >

Examples of the fiber-reinforced composite material include fiber-reinforced plastics (fiber-reinforced plastics; FRP) and carbon fiber-reinforced plastics (CFRP).

<< Method for Healing Epoxy Resin Cured Product >>

The method for healing an epoxy resin cured product of the present disclosure comprises heating an epoxy resin cured product having a void therein at a temperature equal to or higher than a glass transition temperature of the epoxy resin cured product, thereby repairing the void.

The epoxy resin cured product of the present disclosure has excellent self-healing properties and is capable of repairing voids generated therein during molding or under service conditions.

Specific examples of the void include cracks and delamination.

The heating temperature is not particularly limited as long as it is equal to or higher than the glass transition temperature of the epoxy resin cured product.

The heating temperature is preferably 160°C or higher, more preferably 180°C or higher, and still more preferably 200°C or higher.

The method of heating may be any of the known methods, wherein the heating time may be freely set.

Specific examples of the method for healing the epoxy resin cured product of the present disclosure include a method of heating the epoxy resin cured product having the void therein, with use of an autoclave or a blower dryer, at 200°C for one hour.

The method for healing the epoxy resin cured product of the present disclosure may also include pressurization, besides the heating. Pressurization may be given with use of a metal mold or a support frame.

Pressure for the pressurization is preferably 0.05 MPa to 2 MPa, more preferably 0.2 MPa to 2 MPa. The pressure may be applied stepwise.

<< Method for Healing Fiber-Reinforced Composite Material >>

The method for healing a fiber-reinforced composite material of the present disclosure comprises heating a fiber-reinforced composite material having a void therein at a temperature equal to or higher than a glass transition temperature of the fiber-reinforced composite material, thereby repairing the void.

The fiber-reinforced composite material of the present disclosure has excellent self-healing properties and is capable of repairing voids generated therein during molding or under service conditions.

Specific examples of the void include cracks and delamination.

The heating temperature is not particularly limited as long as it is equal to or higher than the glass transition temperature of the fiber-reinforced composite material.

The heating temperature is preferably 160°C or higher, more preferably 180°C or higher, and still more preferably 200°C or higher.

The method of heating may be any of the known methods, wherein the heating time may be freely set.

Specific examples of the method for healing the fiber-reinforced composite material of the present disclosure include a method of heating the fiber-reinforced composite material having the void therein, with use of an autoclave or a blower dryer, at 200°C for one hour.

The method for healing a fiber-reinforced composite material of the present disclosure may include pressurization, besides the heating. Pressurization may be given with use of a metal mold or a support frame.

Pressure for the pressurization is preferably 0.05 MPa to 2 MPa, more preferably 0.2 MPa to 2 MPa. The pressure may be applied stepwise.

<< Method for Remolding Epoxy Resin Cured Product >>

The method for remolding an epoxy resin cured product of the present disclosure comprises heating and pressurizing the epoxy resin cured product at a temperature equal to or higher than a glass transition temperature of the epoxy resin cured product.

The epoxy resin cured product of the present disclosure has excellent remoldability and can be remolded after initial molding.

The heating temperature is not particularly limited as long as it is equal to or higher than the glass transition temperature of the epoxy resin cured product.

The heating temperature is preferably 160°C or higher, more preferably 180°C or higher, and still more preferably 200°C or higher.

The method of heating may be any of the known methods, wherein the heating time may be freely set.
Examples of the heating means include autoclave and a blower dryer.
The heating condition is exemplified by heating at 200°C for one hour.
Pressurization may be given with use of a metal mold or a support frame.
Pressure for the pressurization is preferably 0.05 MPa to 2 MPa, more preferably 0.2 MPa to 2 MPa. The pressure may be applied stepwise.

<< Method for Remolding Fiber-Reinforced Composite Material >>

The method for remolding a fiber-reinforced composite material of the present disclosure comprises heating and pressurizing the fiber-reinforced composite material at a temperature equal to or higher than a glass transition temperature of the fiber-reinforced composite material.
The fiber-reinforced composite material of the present disclosure has excellent remoldability and can be remolded after initial molding.
The heating temperature is not particularly limited as long as it is equal to or higher than the glass transition temperature of the fiber-reinforced composite material.
The heating temperature is preferably 160°C or higher, more preferably 180°C or higher, and still more preferably 200°C or higher.
The method of heating may be any of the known methods, wherein the heating time may be freely set.
Examples of the heating means include autoclave and a blower dryer.
The heating condition is exemplified by heating at 200°C for one hour.
Pressurization may be given with use of a metal mold or a support frame.
Pressure for the pressurization is preferably 0.05 MPa to 2 MPa, more preferably 0.2 MPa to 2 MPa. The pressure may be applied stepwise.

<< Method for Decomposing Epoxy Resin Cured Product >>

The method for decomposing an epoxy resin cured product of the present disclosure comprises bringing the epoxy resin cured product into contact with a decomposition agent containing a reducing agent.
The epoxy resin cured product of the present disclosure has excellent resin decomposability and can be decomposed into low-molecular-weight compounds.
The reducing agent is not particularly limited insofar as the epoxy resin cured product may be decomposed therewith, and is appropriately selectable according to the type of bond contained in the epoxy resin cured product.
Examples of the reducing agent include dithiothreitol, 2-mercaptoethanol, 1-thioglycerol, glutathione, 2-mercaptoethylamine hydrochloride, cysteine hydrochloride, and tris(2-carboxyethyl)phosphine hydrochloride.
The reducing agent is preferably a reducing agent that reduces disulfide bond.
The reducing agent may be used singly, or in combination of two or more kinds.
The reducing agent may be used without solvent, or may be used as a decomposition agent solution after being diluted with a solvent. The epoxy resin cured product of the present disclosure may be decomposed by immersion into the decomposition agent solution that contains the reducing agent.
The amount of use of the decomposition agent solution is not particularly limited, and is determined according to the shape of the epoxy resin cured product, decomposition conditions, and the like.
For example, the amount on the mass basis of the decomposition agent contained in the decomposition agent solution is preferably 1 time to 1000 times, more preferably 1 time to 100 times, and still more preferably 1 time to 10 times the amount of the epoxy resin cured product.
Concentration of the reducing agent in the decomposition agent solution is not specifically limited, which is preferably 0.1% by mass to 99.9% by mass for example, more preferably 1% by mass to 80% by mass, and still more preferably 5% by mass to 50% by mass.
The solvent used for dilution is not particularly limited insofar as the reducing agent may be dissolved therein, and the epoxy resin cured product may be decomposed. The solvent may be water, or organic solvent.
Examples of the organic solvent used for dilution include N,N-dimethylformamide, N,N-dimethylacetamide, N-methyl-2-pyrrolidone, dimethylsulfoxide, 1,4-dioxane, tetrahydrofuran, methanol, and ethanol. Polar organic solvents such as N,N-dimethylformamide, N,N-dimethylacetamide, N-methyl-2-pyrrolidone, and dimethylsulfoxide are particularly preferred, since the epoxy resin cured product can be completely dissolved therein.
The decomposition agent may contain some additive that promotes decomposition of the epoxy resin cured product, besides the reducing agent. In particular, nitrogen-containing bases such as triethylamine, DBU, and ammonia are preferred, since addition of these compounds demonstrates a large effect of promoting the decomposition of the epoxy resin cured product.

In order to promote the decomposition of the epoxy resin cured product, the method for decomposing the epoxy resin cured product of the present disclosure may employ heating at 25°C to 150°C (preferably 25°C to 60°C) for 1 hour to 48 hours (preferably 1 hour to 8 hours), and/or appropriate stirring, and/or sonication as necessary.
For example, the decomposition reaction of the epoxy resin cured product may be allowed to proceed, while stirring the epoxy resin cured product and the decomposition agent at room temperature (25°C) or at 80°C for 8 hours.
In order to promote the decomposition of the epoxy resin cured product, the method for decomposing the epoxy resin cured product of the present disclosure may take place under pressurization at 0.1 MPa to 10 MPa (preferably 0.1 MPa to 1 MPa).
According to the method for decomposing the epoxy resin cured product of the present disclosure, preferably 80% by mass or more of the epoxy resin cured product is decomposed, more preferably 90% by mass or more is decomposed, still more preferably 95% by mass or more is decomposed, and particularly preferably 100% by mass is decomposed, that is, the entire epoxy resin cured product is decomposed.

<< Method for Recovering Reinforcing Fibers from Fiber-Reinforced Composite Material >>

The method for recovering reinforcing fibers from a fiber-reinforced composite material of the present disclosure comprises bringing the fiber-reinforced composite material into contact with a decomposition agent containing a reducing agent.
According to the method for recovering reinforcing fibers from a fiber-reinforced composite material of the present disclosure, when the fiber-reinforced composite material contacts with a decomposition agent containing a reducing agent, the epoxy resin cured product contained in the fiber-reinforced composite material is decomposed and/or dissolved, thereby allowing recovery of the reinforcing fibers.
The description on the decomposition agent that contains the reducing agent, in the method for recovering the reinforcing fibers from the fiber-reinforced composite material, inclusive of the definitions, examples, preferred embodiments and the like, is the same as the description on the decomposition agent that contains the reducing agent in << Method for Decomposing Epoxy Resin Cured Product >>.
In order to promote the decomposition and/or dissolution of the epoxy resin cured product contained in the fiber-reinforced composite material, the method for recovering the reinforcing fibers contained in the fiber-reinforced composite material of the present disclosure may employ heating at 25°C to 150°C (preferably 25°C to 60°C) for 1 hour to 48 hours (preferably 1 hour to 8 hours), and/or appropriate stirring, and/or sonication as necessary.
For example, the decomposition and/or dissolution reactions of the epoxy resin cured product contained in the fiber-reinforced composite material may be allowed to proceed, while stirring the fiber-reinforced composite material and the decomposition agent at room temperature (25°C) or at 80°C for 8 hours.
In order to promote the decomposition and/or dissolution of the epoxy resin cured product contained in the fiber-reinforced composite material, the method for recovering the reinforcing fibers from the fiber-reinforced composite material of the present disclosure may take place under pressurization at 0.1 MPa to 10 MPa (preferably 0.1 MPa to 1 MPa).
The method for recovering the reinforcing fibers from the fiber-reinforced composite material of the present disclosure may include decomposing and/or dissolving the epoxy resin cured product contained in the fiber-reinforced composite material, and then recovering the reinforcing fibers.
The method for recovering the reinforcing fibers is not particularly limited, wherein recovery by winding of filament, or recovery by filtration is acceptable.
The recovered reinforcing fibers may be recycled again into the prepreg or the fiber-reinforced composite material. In this process, an oil agent such as sizing agent may be applied again if necessary.

EXAMPLES

Hereinafter, the present disclosure will be described more specifically with reference to Examples. The present disclosure is, however, not limited thereto. Components and methods of evaluation employed in Examples and Comparative Examples are as follows.
Epoxy resins and curing agents used in Examples and Comparative Examples are as follows.

[Epoxy Resin [A]]

< Diglycidylamine-Type Epoxy Resin [A1] >
"GAN " (trade name) [diglycidylaniline, epoxy equivalent: 103 g/eq, from Nippon Kayaku Co., Ltd.]

< Epoxy Resin Other Than Diglycidylamine-Type Epoxy Resin [A1] >
"jER828" (trade name) [bisphenol A-diglycidyl ether, epoxy equivalent: 189 g/eq, from Mitsubishi Chemical Corporation]

The "jER" is a registered trademark.

[Curing agent [B]]

< Curing agent [B1] >

"4,4-DADS" [4,4'-dithiodianiline, active hydrogen equivalent: 62 g/eq, from Tokyo Chemical Industry Co., Ltd.]
"2,2-DADS" [2,2'-dithiodianiline, active hydrogen equivalent: 62 g/eq, from Tokyo Chemical Industry Co., Ltd.]
"APTMDS" [1,3-bis(3-aminopropyl)tetramethyldisiloxane, active hydrogen equivalent: 62 g/eq, from Tokyo Chemical Industry Co., Ltd.]

< Curing agent Other Than Curing agent [B1] >

"MED-J" [trade name: CUREHARD MED-J, 4,4'-diamino-3,3'-diethyl-5,5'-dimethyldiphenylmethane, active hydrogen equivalent: 71 g/eq, from Kumiai Chemical Industry Co., Ltd.]
The "CUREHARD" is a registered trademark.

[Curing Accelerator]

"TBD" [1,5,7-triazabicyclodecene, from Tokyo Chemical Industry Co., Ltd.]

< Examples 1 to 5 and Comparative Example 1 to 3 >

[1] Preparation of Epoxy Resin Composition

Each epoxy resin composition was prepared by weighing epoxy resin [A] and the like in parts by weight listed in Table 1, followed by mixing at 80°C for 30 minutes with use of a stirrer.

[2] Manufacture of Epoxy Resin Cured Product and Measurement of Physical Properties

(2-1) Manufacture of Epoxy Resin Cured Product

Each of the epoxy resin compositions prepared in [1] above was defoamed in vacuo, and then injected into a silicone resin mold whose thickness was defined to be 4 mm with use of a 4-mm-thick silicone resin spacer. The epoxy resin composition in the silicone resin mold was then cured at a temperature of 120°C for 2 hours, at a temperature of 150°C for 2 hours, and at a temperature of 180°C for 2 hours, to obtain an epoxy resin cured product having a thickness of 4 mm.

(2-2) Measurement of Glass Transition Temperature (Tg)

The glass transition temperature of the epoxy resin cured product was measured under a nitrogen gas flow at a flow rate of 40 mL/min, with use of DSC Q2000, a differential scanning calorimeter from TA Instruments. Five milligrams ± 1 mg of the epoxy resin cured product manufactured in (2-1) above were sampled, and then heated from 30°C up to 350°C at 10°C/min, wherein an inflection point, found on the obtained curve in the process of transition, was recorded as the glass transition temperature of the epoxy resin cured product.

(2-3) Measurement of Stress Relaxation Rate

Each of the epoxy resin compositions prepared in [1] above was set on an 8-mmφ aluminum parallel plate with a 2 mm gap, and cured at a temperature of 120°C for 2 hours, at a temperature of 150°C for 2 hours, and at a temperature of 180°C for 2 hours, to obtain the epoxy resin.
The thus obtained epoxy resin cured product was then maintained at a temperature 40°C higher than the glass transition temperature for 2 minutes, and the modulus G generated under application of a $6.25 \times 10^{-3}$ rad displacement was

measured over 3600 seconds, and a time plot thereof was recorded. The stress relaxation was measured in a nitrogen flow at 10 L/min, with use of Discovery DHR-2, a rheometer from TA Instruments.

In the obtained time plot, the stress relaxation rate was determined by the the following formula:

$$[1 - ((G(min))/(G(0)))] \times 100$$

G(0) herein represents a modulus at the start of application of the external force (that is, 0 seconds after the start of application of the external force). G(min) is a minimum modulus at the time point of one hour from the start of application of the external force, in other words, a minimum modulus over a period up to 3600 seconds after the start of application of the external force. If the lower limit value measurable by an instrument has been reached within 3600 seconds, the modulus is defined as such lower limit value, meanwhile if the lower limit value measurable by the instrument has not been reached within one hour after the start of application of the external force, the modulus is defined as a value measured 3600 seconds after the start of application of the external force. In the present disclosure, the stress relaxation rate was determined while assuming that the modulus G(0) at 0 seconds after the start of application of the external force is equal to modulus G(0.1) at 0.1 seconds after the start of application of the external force.

Results of the stress relaxation measurement are summarized in Table 1 and Fig. 1.

Example 1 was found to cause stress relaxation under application of the external force, demonstrating a stress relaxation rate of 99.7% at 3600 seconds after the start of application of the external force. Example 4 was found to cause stress relaxation under application of the external force, demonstrating a stress relaxation rate of 96.1% at 3600 seconds after the start of application of the external force.

On the other hand, Comparative Example 1 was found to demonstrate a stress relaxation rate of 67.3% at 3600 seconds after the start of application of the external force.

(2-4) Stress Relaxation Mode Separation Analysis

The modulus G(t) at 200°C recorded in (2-3) above was analyzed according to the aforementioned [Stress Relaxation Mode Separation Analysis].

The stress relaxation mode separation analysis was conducted in the range from 0 seconds to 3600 seconds, in 25 types of modes below:

$\tau i$ = 1, 2.5, 4, 5.5, 7, 8.5, 10, 25, 40, 55, 70, 85, 100, 250, 400, 550, 700, 850, 1000, 2500, 4000, 5500, 7000, 8500, 10000.

The results of the stress relaxation mode separation analysis of Examples 1 and 4, and Comparative Example 1 are illustrated in Fig. 2.

In Example 1, a relaxation mode group having a relaxation time of shorter than 200 seconds appeared to have 100% contribution, meanwhile a relaxation mode group having a relaxation time of 100 seconds or longer appeared to have no contribution. In Example 4, a relaxation mode group having a relaxation time of shorter than 200 seconds appeared to have 75% contribution, and a relaxation mode group having a relaxation time of 1000 seconds or longer appeared to have 9% contribution.

(2-5) Confirmation of Remoldability

Each of the epoxy resin cured products manufactured in (2-1) above was crushed into chips of 1 mm or shorter on three sides, and the obtained epoxy resin cured product in the chip form was used as a sample. Next, 0.7 g of the sample was set in a metal mold having an 8-mmφ cylindrical formwork, and preheated at 200°C for 5 minutes. A pressure of 25 MPa was further applied for 30 minutes with a press machine at 200°C, to prepare a remolded sample.

The obtained remolded sample was visually observed. The remoldability was determined according to the criteria below, wherein A and B were judged to be in a practically acceptable range.

- Criteria -

A: The remolded sample had a smooth surface, with no grain boundary of the chip when observed under transmitted light;

B: the remolded sample had a smooth surface, but with turbidity ascribed to grain boundary of the chip when observed

under transmitted light; and
C: grain boundary of the chip before molding was observed on the surface of the remolded sample.

(2-6) Confirmation of Self-Healability

Each of the epoxy resin cured products manufactured in (2-1) above was polished to a thickness of 2 mm, and a crack of approximately 2 mm was made with a razor. The sample was then placed on a sample stage of a transmission microscope equipped with a heat stage, preheated at 120°C, then heated to 200°C at 20°C/min, and lastly maintained at 200°C for 15 minutes, to manufacture a self-healed sample.

The obtained self-healed sample was observed under a transmission microscope at n = 5. The self-healability was determined according to the criteria below, wherein A and B were judged to be in a practically acceptable range.

- Criteria -

A: Crack in the self-healed sample almost completely disappeared;
B: crack in the self-healed sample partially shrank; and
C: no disappearance or shrinkage of crack observed in the self-healed sample.

(2-7) Confirmation of Resin Decomposability

Each of the epoxy resin cured products manufactured in (2-1) above was cut into a 1 cm × 1 cm × 0.4 mm size, and one chip was immersed in 40 mL of an N,N-dimethylformamide solution that contains 4 mL of 1-thioglycerol, and stirred individually at room temperature (25°C) and 80°C.

State of the solution after eight hours was visually observed. The resin decomposability was determined according to the criteria below, wherein A and B were judged to be in a practically acceptable range.

- Criteria -

A: The epoxy resin cured product completely decomposed at room temperature to form a homogeneous solution;
B: the epoxy resin cured product did not completely decompose at room temperature, but 80% by mass or more thereof decomposed at 80°C; and
C: less than 80% by mass of the epoxy resin cured product decomposed both at room temperature and 80°C.

(2-8) Flexural Modulus (FM) and Flexural Strength (FS)

The flexural modulus and the flexural strength of each of the epoxy resin cured products manufactured in (2-1) above were measured by the methods in accordance with JIS K 7171:2016 (ISO 178:2010). Each epoxy resin cured product was cut into a 80 mm × 20 mm × 4 mm (thickness h) size, to obtain a test piece. The flexural modulus and the flexural strength of the test piece were measured, while setting the inter-fulcrum distance L (in mm) = 16 × 4 (thickness h), and the test speed to 2 mm/min.

The individual physical properties of the cured resin products obtained by curing the epoxy resin compositions were summarized in Table 1. The degree of cure of the epoxy resin cured products obtained by curing the epoxy resin compositions obtained in Examples 1 to 5 and Comparative Examples 1 to 3 was measured by a method (DSC method) in accordance with JIS K 7148-1:2015 (ISO 14322:2012), and all were found to be 99.9% or larger.

[Table 1]

| | | | | Example 1 | Example 2 | Example 3 | Example 4 | Comparative Example 1 | Comparative Example 2 | Example 5 | Comparative Example 3 |
|---|---|---|---|---|---|---|---|---|---|---|---|
| Composition (parts by mass) | Epoxy resin [A] | [A1] | GAN | 100 | 35 | 19 | 19 | - | 100 | 100 | - |
| | | Other than [A1] | jER828 | - | 65 | 81 | 81 | 100 | - | - | 100 |
| | Curing agent [B] | [B1] | 4,4-DADS | 60 | 43 | 38 | 30 | 33 | - | - | - |
| | | | 2,2-DADS | - | - | - | 8 | - | - | - | - |
| | | | APTMDS | - | - | - | - | - | - | 60 | 33 |
| | | Other than [B1] | MED-J | - | - | - | - | - | 69 | - | - |
| | Curing accelerator | TBD | | - | - | - | - | - | - | 10 | 10 |
| Ratio (a1)/(a) | | | | 1.0 | 0.5 | 0.3 | 0.3 | 0.0 | 1.0 | 1.0 | 0.0 |
| Ratio (b1)/(b) | | | | 1.0 | 1.0 | 1.0 | 1.0 | 1.0 | 0.0 | 1.0 | 1.0 |
| Ratio (a)/(b) | | | | 1.0 | 1.0 | 1.0 | 1.0 | 1.0 | 1.0 | 1.0 | 1.0 |
| Glass transition temperature (°C) | | | | 117 | 133 | 148 | 140 | 160 | 121 | 61 | 75 |
| Flexural modulus (GPa) | | | | 4.31 | 3.43 | 3.1 | 3.24 | 2.42 | 4.28 | 2.21 | 2.04 |
| Flexural strength (MPa) | | | | 19 | 124 | 135 | 143 | 107 | 26 | 35 | 52 |
| Remoldability | | | | A | A | A | A | C | C | B | C |
| Self-healability | | | | A | A | A | A | B | C | B | B |
| Resin decomposability | | | | A | A | A | A | C | C | A | A |
| Stress relaxation rate (%) | | | | 99.7 | 99.2 | 99.8 | 96.1 | 67.3 | 0 | 98.4 | 96.4 |
| Rate of contribution of relaxation mode (%) | < 200 sec | | | 100 | 95 | 68 | 75 | 58 | 0 | 28 | 3 |
| | 200 to 1000 sec | | | 0 | 4 | 22 | 16 | 19 | 0 | 38 | 20 |
| | > 1000 sec | | | 0 | 1 | 10 | 9 | 23 | 100 | 34 | 77 |

Judging from the above, the epoxy resin compositions of Examples 1 to 5 were found to yield the cured products that excel in the remoldability and the self-healability, despite the use of the compound that contains a dynamic covalent bonding site at a theoretical equivalent or less with respect to an epoxy resin.

(2-9) Confirmation of Decomposition Product

The decomposition product of the epoxy resin cured product of Example 1, obtained in (2-7) Confirmation of Resin Decomposability, was analyzed by FT-IR, revealing that the decomposition product had a structure below.

The decomposition product of the epoxy resin cured product was analyzed by the ATR method with use of Nicolet iS20, an FT-IR spectrophotometer from Thermo Fisher Scientific.

A result of FT-IR measurement of the decomposition product of the epoxy resin cured product in Example 1 is shown in Fig. 3.

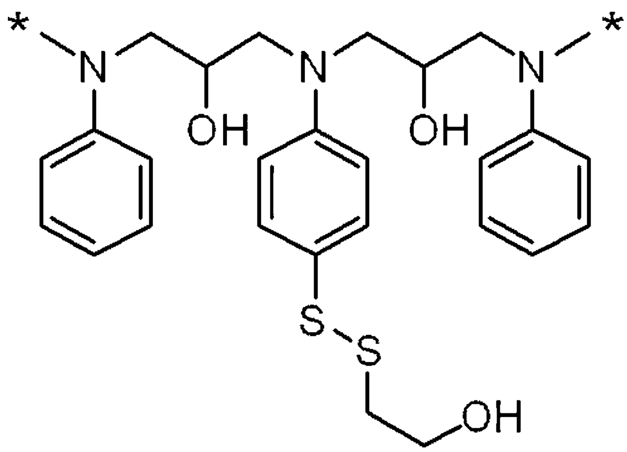

Judging from the above, the epoxy resin cured products obtained by curing the epoxy resin compositions of Examples 1 to 5 were found to excel in the resin decomposability, whereby the epoxy resin cured products were confirmed to be decomposable into the aforementioned low molecular weight compound.

The disclosure of Japanese Patent Application No. 2024-057145 filed on March 29, 2024 is incorporated herein by reference in its entirety.

All documents, patent applications, and technical standards described in this specification are incorporated herein by reference to the same extent as if each document, patent application, and technical standard were specifically and individually indicated to be incorporated by reference.

## Claims

1. **1.** An epoxy resin composition, comprising at least an epoxy resin [A] and a curing agent [B], wherein:

   the epoxy resin [A] contains at least a diglycidylamine-type epoxy resin [A1] represented by the following formula (1), and
   the curing agent [B] contains at least a curing agent [B1] containing a dynamic covalent bonding site Y:

   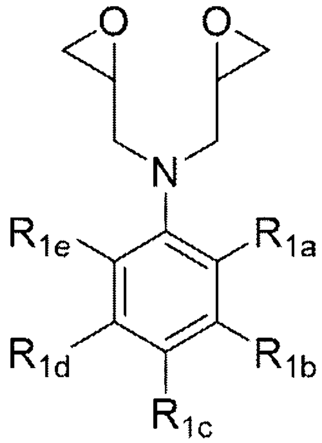

   (1)

   wherein, in formula (1), each of $R_{1a}$, $R_{1d}$, $R_{1c}$, $R_{1d}$, and $R_{1e}$ independently represents a hydrogen atom, an aliphatic hydrocarbon group having 1 to 20 carbon atoms, an alicyclic hydrocarbon group, an aromatic hydrocarbon group, an alkoxy group, an amino group, or a halogen atom.

2. **2.** The epoxy resin composition according to claim 1, wherein a ratio (a1)/(a), defined as a molar amount (a1) of epoxy groups in the diglycidylamine-type epoxy resin [A1] relative to a molar amount (a) of epoxy groups in the epoxy resin [A], is from 0.05 to 1.0.

3. **3.** The epoxy resin composition according to claim 1, wherein the curing agent [B1] contains active hydrogens, and a ratio (b1)/(b), defined as a molar amount (b1) of active hydrogens in the curing agent [B1] relative to a molar amount (b) of active hydrogens in the curing agent [B], is from 0.1 to 1.0.

4. **4.** The epoxy resin composition according to claim 1, wherein a ratio (b1)/(a), defined as a molar amount (b1) of active hydrogens in the curing agent [B1] relative to a molar amount (a) of epoxy groups in the epoxy resin [A], is from 0.6 to 1.5.

5. **5.** The epoxy resin composition according to claim 1, wherein, when the composition is cured to a degree of cure of 90% or higher to obtain a cured product and an external force is applied to the cured product at a temperature 40°C higher than the glass transition temperature of the cured product, a stress relaxation rate at one hour from the start of application of the external force is 95% or more.

6. **6.** The epoxy resin composition according to claim 1, wherein the curing agent [B1] contains an amine-based curing agent represented by the following formula (2):

   $$H_2N\text{-}R_1\text{-}Y\text{-}R_2\text{-}NH_2 \qquad (2)$$

   wherein, in formula (2), each of $R^1$ and $R^2$ independently represents an aliphatic hydrocarbon group having 1 to 20 carbon atoms, an alicyclic hydrocarbon group, an aromatic hydrocarbon group, an ether group, or a divalent group formed by combining two or more groups selected from the group consisting of an aliphatic hydrocarbon group having 1 to 20 carbon atoms, an alicyclic hydrocarbon group, an aromatic hydrocarbon group, and an ether group, and Y represents a dynamic covalent bonding site.

7. **7.** The epoxy resin composition according to claim 1, wherein the dynamic covalent bonding site Y contains a disulfide bond.

**8.** The epoxy resin composition according to claim 1, wherein the curing agent [B1] contains an amine-based curing agent represented by the following formula (3):

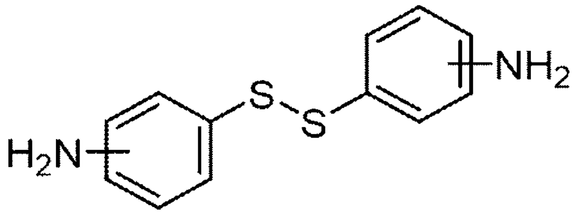

(3)

.

**9.** An epoxy resin cured product, obtained by curing the epoxy resin composition according to claim 1.

**10.** The epoxy resin cured product according to claim 9, wherein, when the epoxy resin cured product is contacted with a decomposition agent containing a reducing agent and heated at 100°C for 48 hours, 80% by mass or more of the epoxy resin cured product is dissolved.

**11.** An epoxy resin cured product, wherein, when the epoxy resin cured product is contacted with a decomposition agent containing a reducing agent and heated at 100°C for 48 hours, at least one compound containing a structure represented by the following formula (7) is produced:

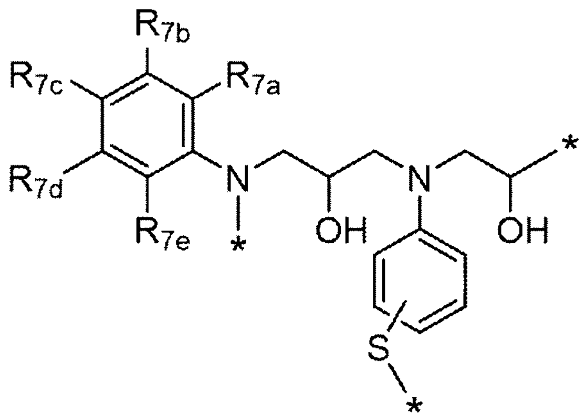

(7)

wherein, in formula (7), each of $R_{7a}$, $R_{7b}$, $R_{7c}$, $R_{7d}$, and $R_{7e}$ independently represents a hydrogen atom, an aliphatic hydrocarbon group having 1 to 20 carbon atoms, an alicyclic hydrocarbon group, an aromatic hydrocarbon group, an alkoxy group, an amino group, or a halogen atom, and * represents a bond.

**12.** A prepreg, obtained by impregnating a fiber-reinforced substrate having reinforcing fibers with the epoxy resin composition according to claim 1 or 2,
wherein a content of the reinforcing fibers is from 25% by volume to 75% by volume based on a total volume of the prepreg.

**13.** A fiber-reinforced composite material, comprising the epoxy resin cured product according to claim 9 or 10 and a fiber-reinforced substrate having reinforcing fibers,
wherein a content of the reinforcing fibers is from 25% by volume to 75% by volume based on a total volume of the fiber-reinforced composite material.

**14.** A method for healing an epoxy resin cured product, the method comprising heating the epoxy resin cured product according to claim 9 or 10, which has a void therein, at a temperature equal to or higher than a glass transition temperature of the epoxy resin cured product, thereby healing the void.

**15.** A method for healing a fiber-reinforced composite material, the method comprising heating the fiber-reinforced composite material according to claim 13, which has a void therein, at a temperature equal to or higher than a glass transition temperature of the fiber-reinforced composite material, thereby healing the void.

**16.** A method for remolding an epoxy resin cured product, the method comprising heating and pressurizing the epoxy resin cured product according to claim 9 or 10, at a temperature equal to or higher than a glass transition temperature of the epoxy resin cured product.

**17.** A method for remolding a fiber-reinforced composite material, the method comprising heating and pressurizing the fiber-reinforced composite material according to claim 13, at a temperature equal to or higher than a glass transition temperature of the fiber-reinforced composite material.

**18.** A method for decomposing an epoxy resin cured product, the method comprising contacting the epoxy resin cured product according to claim 9 or 10 with a decomposition agent containing a reducing agent.

**19.** A method for recovering reinforcing fibers from a fiber-reinforced composite material, the method comprising contacting the fiber-reinforced composite material according to claim 13 with a decomposition agent containing a reducing agent.

FIG.1

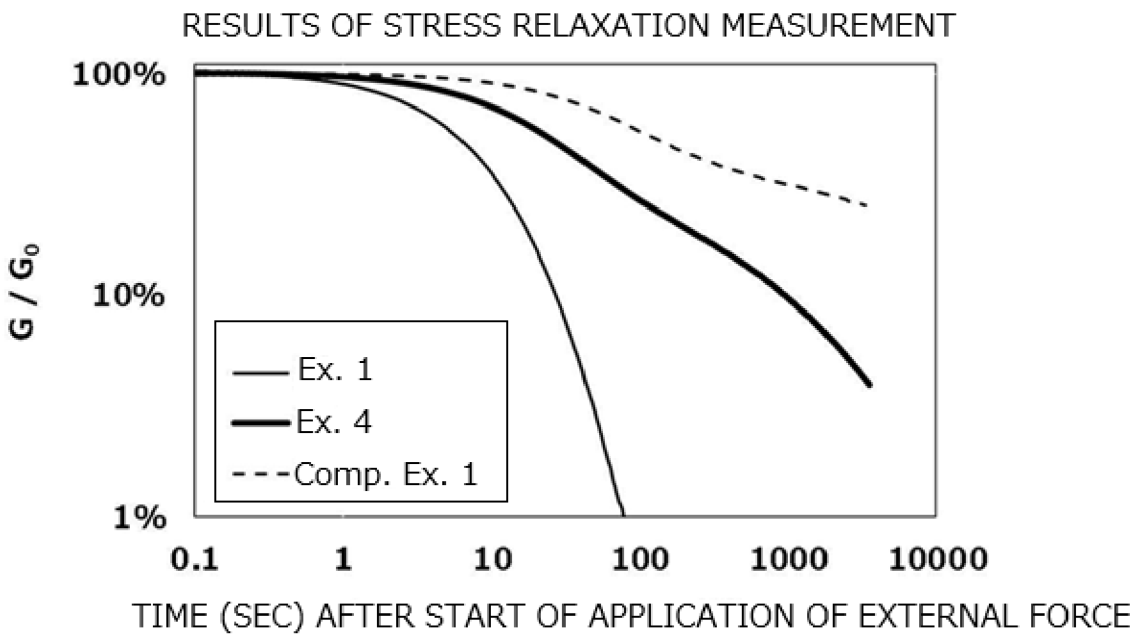
RESULTS OF STRESS RELAXATION MEASUREMENT
100%
10%
1%
G / G0
0.1
1
10
100
1000
10000
TIME (SEC) AFTER START OF APPLICATION OF EXTERNAL FORCE
Ex. 1
Ex. 4
Comp. Ex. 1

FIG.2

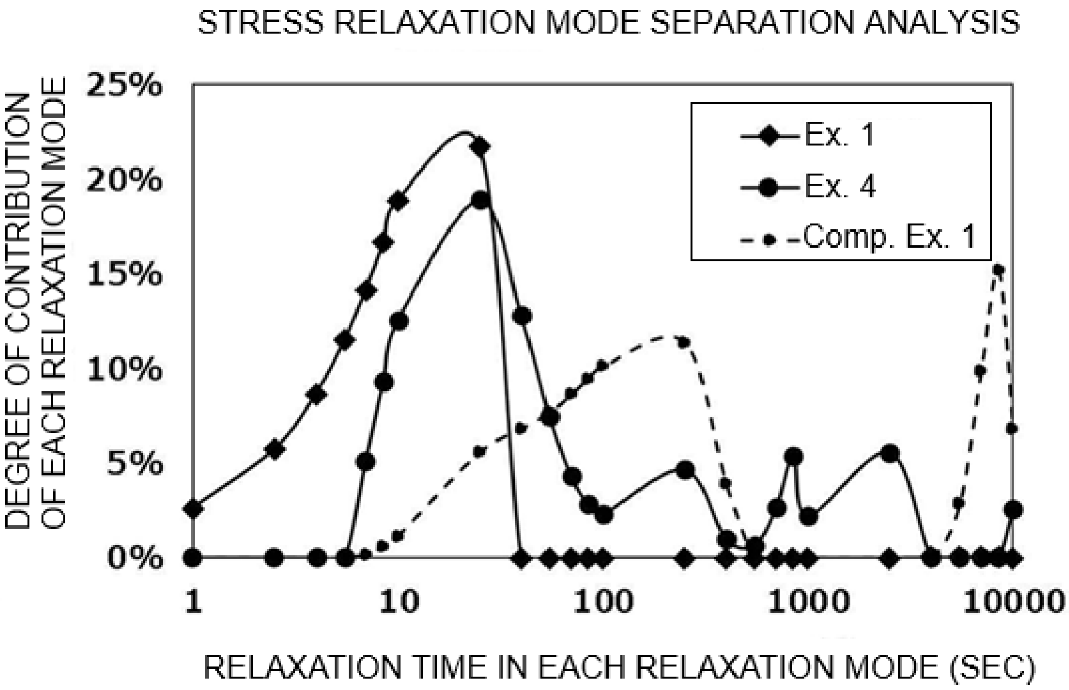
STRESS RELAXATION MODE SEPARATION ANALYSIS
DEGREE OF CONTRIBUTION OF EACH RELAXATION MODE
25%
20%
15%
10%
5%
0%
1
10
100
1000
10000
RELAXATION TIME IN EACH RELAXATION MODE (SEC)
Ex. 1
Ex. 4
Comp. Ex. 1

FIG.3

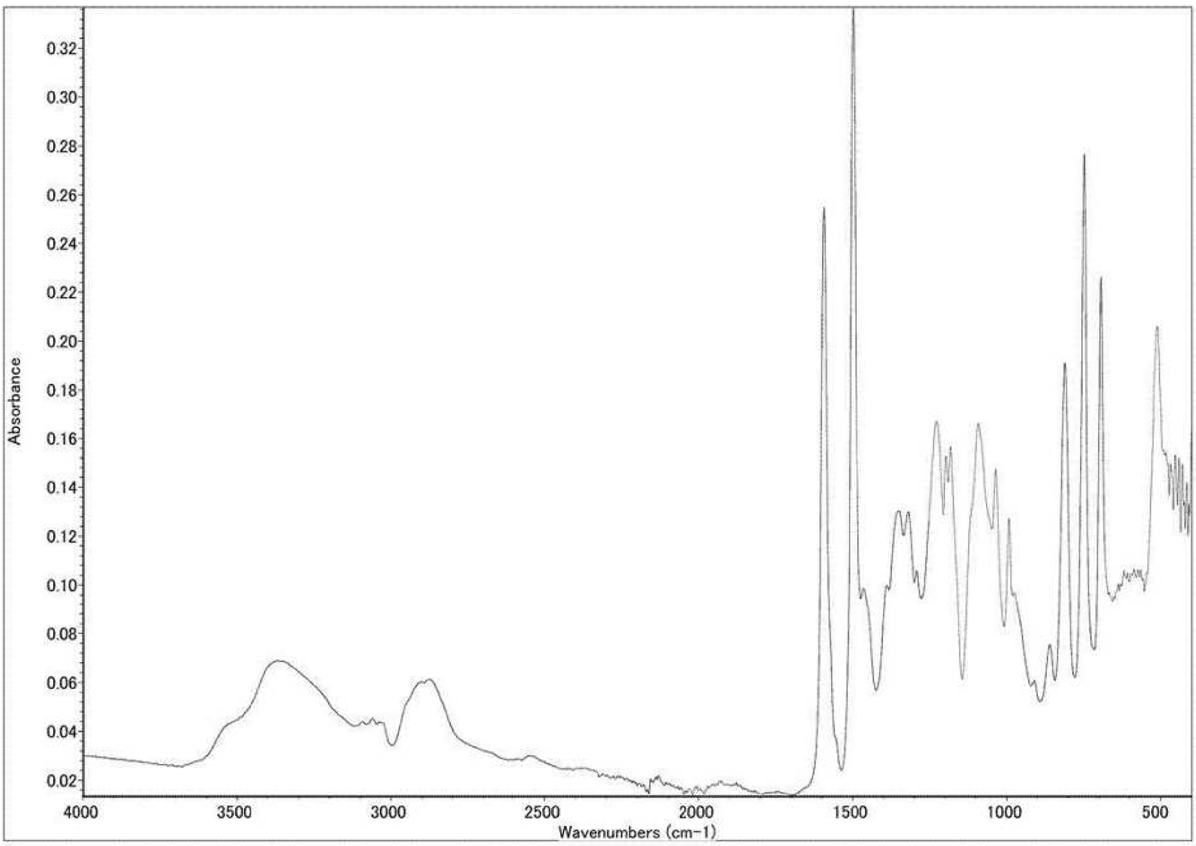

Absorbance
0.32
0.30
0.28
0.26
0.24
0.22
0.20
0.18
0.16
0.14
0.12
0.10
0.08
0.06
0.04
0.02
4000
3500
3000
2500
2000
1500
1000
500
Wavenumbers (cm-1)

## INTERNATIONAL SEARCH REPORT

International application No.
**PCT/JP2025/009443**

### A. CLASSIFICATION OF SUBJECT MATTER

***C08G 59/40***(2006.01)i; ***C08G 59/28***(2006.01)i; ***C08G 59/50***(2006.01)i; ***C08J 5/24***(2006.01)i
FI: C08G59/40; C08G59/28; C08G59/50; C08J5/24 CFC

According to International Patent Classification (IPC) or to both national classification and IPC

### B. FIELDS SEARCHED

Minimum documentation searched (classification system followed by classification symbols)

C08G59/40; C08G59/28; C08G59/50; C08J5/24

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2023/145341 A1 (TEIJIN LIMITED) 03 August 2023 (2023-08-03)<br>examples 1-18 | 1-19 |
| Y | WO 2022/186101 A1 (TEIJIN LIMITED) 09 September 2022 (2022-09-09)<br>examples 8-9, 12-14, 17-18, 32, 34, 36, 38, 41, 43 | 1-19 |
| Y | WO 2021/048969 A1 (TEIJIN LIMITED) 18 March 2021 (2021-03-18)<br>examples 4-9 | 1-19 |
| Y | US 4882399 A (POLYTECHNIC UNIVERSITY) 21 November 1989 (1989-11-21)<br>claims 1-56, example 1 | 1-19 |
| Y | JP 2022-168750 A (NATIONAL INSTITUTE FOR MATERIALS SCIENCE) 08 November 2022 (2022-11-08)<br>paragraphs [0006], [0084], examples 1-4 | 1-19 |
| Y | WO 2015/181054 A1 (FUNDACION CIDETEC) 03 December 2015 (2015-12-03)<br>pp. 3-4, examples 1-22 | 1-19 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 April 2025** | **28 April 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2025/009443**

| Patent document cited in search report | Publication date (day/month/year) | Patent family member(s) | Publication date (day/month/year) |
|---|---|---|---|
| WO 2023/145341 A1 | 03 August 2023 | EP 4471073 A1<br>examples 1-18<br>CN 118742586 A | |
| WO 2022/186101 A1 | 09 September 2022 | US 2024/0141096 A1<br>examples 8-9, 12-14, 17-18, 32, 34, 36, 38, 41, 43<br>EP 4303247 A1 | |
| WO 2021/048969 A1 | 18 March 2021 | US 2022/0332939 A1<br>examples 4-9<br>EP 4029897 A1 | |
| US 4882399 A | 21 November 1989 | (Family: none) | |
| JP 2022-168750 A | 08 November 2022 | (Family: none) | |
| WO 2015/181054 A1 | 03 December 2015 | US 2017/0166717 A1<br>EP 2949679 A1<br>CA 2949583 A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015181054 A1
- JP 2024057145 A


### Non-patent literature cited in the description


- *J. Am. Chem. Soc.*, 2022, vol. 144, 12280-12289